# EUROPEAN PATENT APPLICATION

(11) **EP 4 757 207 A1**
(43) Date of publication of application: **10.06.2026**
(21) Application number: 24848137.6
(22) Date of filing: 25.07.2024
(51) Int. Cl.: H04B 10/079

(54) **SIGNAL TRANSMISSION METHOD, COMMUNICATION SYSTEM AND RELATED DEVICE**

(30) Priority: 31.07.2023 CN 202310956699
(71) Applicant: HUAWEI TECHNOLOGIES CO., LTD., Shenzhen 518129 (CN)
(72) Inventor: SU, Changzheng, Shenzhen, Guangdong 518129 (CN); ZENG, Jiahong, Shenzhen, Guangdong 518129 (CN); TANG, Xizi, Shenzhen, Guangdong 518129 (CN)
(74) Representative: Epping - Hermann - Fischer
(86) International application number: PCT/CN2024/107523
(87) International publication number: WO 2025/026180

(57) **Abstract**

Embodiments of this application disclose a signal transmission method, a communication system, and an optical-electro conversion module. The optical-electro conversion module and a device jointly compensate for an electrical signal transmitted over a transmit link, to effectively suppress inter-symbol interference, improve signal quality of an optical signal, and reduce a bit error rate of the optical signal. The method includes: First, a device or an optical-electro conversion module allocates a first compensation parameter to the optical-electro conversion module, where the first compensation parameter is less than a link parameter of a transmit link. Then, the device compensates for a first electrical signal based on a second compensation parameter, to obtain a compensated second electrical signal. Then, the device sends the second electrical signal to the optical-electro conversion module. Then, the optical-electro conversion module compensates for the second electrical signal based on the first compensation parameter, to obtain a compensated third electrical signal. Finally, the optical-electro conversion module performs electro-optical conversion on the third electrical signal to obtain an optical signal, and the optical-electro conversion module emits the optical signal.

## Description

This application claims priority to Chinese Patent Application No. CN202310956699.8, filed with the China National Intellectual Property Administration on July 31, 2023 and entitled "SIGNAL TRANSMISSION METHOD, COMMUNICATION SYSTEM, AND RELATED DEVICE", which is incorporated herein by reference in its entirety.

### TECHNICAL FIELD

Embodiments of this application relate to the field of optical communication, and in particular, to a signal transmission method, a communication system, and a related device.

### BACKGROUND

An optical network is widely applied to a 5th generation mobile communication technology (5th generation mobile communication technology, 5G), artificial intelligence, and other fields. The optical network includes a plurality of optical communication devices. An existing optical communication device includes a device board, and a processing chip is packaged on the device board. The optical communication device further includes an optical module connected to the device board. To reduce power consumption of the optical module, the processing chip compensates for an electrical signal to suppress inter-symbol interference (inter-symbol interference, ISI). The processing chip sends a compensated electrical signal to the optical module, and the optical module performs electro-optical conversion on the electrical signal to output an optical signal.

However, when the processing chip compensates for the electrical signal, the ISI of the electrical signal is suppressed to a limited extent. This reduces signal quality of the optical signal output by the optical module, resulting in significant degradation of the optical signal output by the optical module and an increased bit error rate.

### SUMMARY

Embodiments of this application provide a signal transmission method, a communication system, and a related device. An optical-electro conversion module and a device jointly compensate for an electrical signal transmitted over a transmit link, to effectively suppress ISI, improve signal quality of an optical signal, and reduce a bit error rate of the optical signal.

According to a first aspect, an embodiment of this application provides a signal transmission method. The method is applied to a communication system. The communication system includes a device and an optical-electro conversion module. The method includes:
The device or the optical-electro conversion module allocates a first compensation parameter to the optical-electro conversion module. The first compensation parameter is less than a link parameter of a transmit link. The link parameter is used to compensate for an electrical signal transmitted over the transmit link. The transmit link includes a first transmit link and a second transmit link. The device includes a processing chip and a connector. The optical-electro conversion module includes an electro-optical conversion chip. The first transmit link is from the connector to the electro-optical conversion chip, and the second transmit link is from the processing chip to the connector. The device compensates for a first electrical signal based on a second compensation parameter, to obtain a compensated second electrical signal. The second compensation parameter is less than the link parameter of the transmit link. The device obtains P tap coefficients, and the device compensates for the first electrical signal based on the P tap coefficients, to obtain the second electrical signal. The P tap coefficients correspond to the second compensation parameter. Alternatively, the device obtains P prestored tap coefficients based on the second compensation parameter. The device sends the second electrical signal to the optical-electro conversion module. The optical-electro conversion module compensates for the second electrical signal based on the first compensation parameter, to obtain a compensated third electrical signal. The optical-electro conversion module performs electro-optical conversion on the third electrical signal to obtain an optical signal, and the optical-electro conversion module emits the optical signal. The optical-electro conversion module amplifies a high-frequency signal and attenuates a low-frequency signal in the second electrical signal based on the first compensation parameter, to obtain the third electrical signal.

According to the method shown in this aspect, the device and the optical-electro conversion module perform distributed compensation on the electrical signal transmitted over the transmit link. That is, the device compensates for one part (that is, the second compensation parameter) of the link parameter, and the optical-electro conversion module compensates for the other part (that is, the first compensation parameter) of the link parameter. Because the device and the optical-electro conversion module jointly compensate for the electrical signal transmitted over the transmit link, this reduces a burden on the device for compensating for the electrical signal transmitted over the transmit link, suppresses ISI, and improves signal quality of the optical signal output by the optical-electro conversion module.

Based on the first aspect, in an optional implementation, the device allocates the first compensation parameter to the optical-electro conversion module.

In this implementation, the device allocates the first compensation parameter based on the obtained link parameter, and the optical-electro conversion module compensates for the second electrical signal based on the first compensation parameter from the device, to implement distributed compensation performed by the device and the optical-electro conversion module on the electrical signal transmitted over the transmit link.

Based on the first aspect, in an optional implementation, after the device allocates the first compensation parameter to the optical-electro conversion module, the method further includes: The device obtains a first coefficient set from the optical-electro conversion module. The first coefficient set is in a prestored list in the optical-electro conversion module, and corresponds to the first compensation parameter. The prestored list includes M coefficient sets. The first coefficient set is one of the M coefficient sets, and the first coefficient set is used to obtain P tap coefficients. Each of M and P is any integer greater than 1. The first coefficient set is used to compensate for the first electrical signal. For example, the first coefficient set includes N tap coefficients, and N is any integer greater than 1. For another example, the first coefficient set includes a first time domain impulse response coefficient. The first time domain impulse response coefficient is a time domain response coefficient obtained in a process in which an electrical signal is transmitted over the first transmit link. It may be understood that the first time domain impulse response coefficient is related to hardware of the first transmit link.

In this implementation, the optical-electro conversion module prestores the prestored list, and the prestored list stores the M coefficient sets. The optical-electro conversion module obtains different first coefficient sets for different first compensation parameters based on the prestored list, so that the device performs different compensation on the first electrical signal based on the different first coefficient sets, to suppress the ISI to a maximum extent, and improve the signal quality of the optical signal.

Based on the first aspect, in an optional implementation, before the device compensates for the first electrical signal based on the second compensation parameter, to obtain the compensated second electrical signal, the method includes: The device convolves the first coefficient set and a second coefficient set to obtain a third coefficient set. The second coefficient set corresponds to the second compensation parameter, and the second coefficient set is used to obtain P tap coefficients. The third coefficient set is used to compensate for the first electrical signal. For example, the second coefficient set includes P tap coefficients. For another example, the second coefficient set includes a second time domain impulse response coefficient. The second time domain impulse response coefficient is a time domain response coefficient obtained in a process in which an electrical signal is transmitted over the second transmit link. It may be understood that the second time domain impulse response coefficient is related to hardware of the second transmit link. If the first coefficient set includes the first time domain impulse response coefficient, and the second coefficient set includes the second time domain impulse response coefficient, the convolved third coefficient set includes a plurality of tap coefficients. The device performs an inverse operation on the third coefficient set to obtain P tap coefficients.

In this implementation, the third coefficient set is obtained by convolving the first coefficient set and the second coefficient set, thereby improving signal quality of the second signal obtained by the device by compensating for the first electrical signal based on the third coefficient set, and suppressing the ISI.

Based on the first aspect, in an optional implementation, the optical-electro conversion module allocates the first compensation parameter to the optical-electro conversion module.

In this implementation, if the device includes a plurality of optical-electro conversion modules, the plurality of optical-electro conversion modules allocate the first compensation parameter based on parallel computing, thereby effectively improving computational efficiency of allocating the first compensation parameter, and reducing a time required for the device to emit an optical signal.

Based on the first aspect, in an optional implementation, after the optical-electro conversion module allocates the first compensation parameter to the optical-electro conversion module, the method further includes: The optical-electro conversion module obtains a second coefficient set from the device. The second coefficient set corresponds to the second compensation parameter, and the second coefficient set is used to obtain P tap coefficients. P is any integer greater than 1. The optical-electro conversion module convolves a first coefficient set and the second coefficient set to obtain a third coefficient set. The first coefficient set is in a prestored list in the optical-electro conversion module, and corresponds to the first compensation parameter. The prestored list includes M coefficient sets. The first coefficient set is one of the M coefficient sets, and the first coefficient set is used to obtain P tap coefficients. M is any integer greater than 1. The device obtains the third coefficient set from the optical-electro conversion module. The third coefficient set is used to compensate for the first electrical signal.

In this implementation, the third coefficient set is obtained by convolving the first coefficient set and the second coefficient set, thereby improving signal quality of the second signal obtained by the device by compensating for the first electrical signal based on the third coefficient set, and suppressing the ISI.

Based on the first aspect, in an optional implementation, that the device compensates for the first electrical signal based on the second compensation parameter, to obtain the compensated second electrical signal includes: A feed-forward equalizer FFE of the device compensates for the first electrical signal based on the third coefficient set, to obtain the second electrical signal. The third coefficient set includes P tap coefficients.

In this implementation, the FFE of the device compensates for the first electrical signal based on the third coefficient set, to obtain the second electrical signal. This can effectively improve the signal quality of the optical signal output by the optical-electro conversion module, and effectively suppress the ISI.

Based on the first aspect, in an optional implementation, that the device compensates for the first electrical signal based on the second compensation parameter, to obtain the compensated second electrical signal includes: The device obtains a second coefficient set corresponding to the second compensation parameter. The second coefficient set is used to obtain P tap coefficients, and P is any integer greater than 1. An FFE of the device compensates for the first electrical signal based on the second coefficient set, to obtain the second electrical signal.

In this implementation, distributed compensation performed by the device and the optical-electro conversion module for the transmit link can be implemented, thereby effectively improving the signal quality of the optical signal output by the optical-electro conversion module, and effectively suppressing the ISI. In addition, in a compensation process, the optical-electro conversion module does not need to store an excessively large amount of data, thereby reducing occupied space resources of a register of the optical-electro conversion module. The optical-electro conversion module directly compensates for the second electrical signal based on the first compensation parameter from the device, and the device directly compensates for the first electrical signal based on the second compensation parameter, thereby reducing a time consumed for the device and the optical-electro conversion module to perform the signal transmission method.

Based on the first aspect, in an optional implementation, before the device or the optical-electro conversion module allocates the first compensation parameter to the optical-electro conversion module, the method further includes: The device or the optical-electro conversion module obtains the prestored link parameter. Alternatively, the device or the optical-electro conversion module obtains a first link parameter of the first transmit link. The first link parameter is used to compensate for an electrical signal transmitted over the first transmit link. The device obtains a second link parameter of the second transmit link. The second link parameter is used to compensate for an electrical signal transmitted over the second transmit link, and the link parameter is greater than or equal to a sum of the first link parameter and the second link parameter.

In this implementation, based on the link parameter, distributed compensation performed by the device and the optical-electro conversion module for the transmit link can be implemented, thereby reducing a burden on the device for compensating for the second transmit link, effectively improving the signal quality of the optical signal output by the optical-electro conversion module, suppressing the ISI, reducing a bit error rate, and ensuring successful service transmission.

Based on the first aspect, in an optional implementation, before the device or the optical-electro conversion module allocates the first compensation parameter to the optical-electro conversion module, the method further includes: The device or the optical-electro conversion module obtains a second link parameter of the second transmit link. The second link parameter is used to compensate for an electrical signal transmitted over the second transmit link, and the first compensation parameter is less than the second link parameter.

In this implementation, based on a first link parameter and the second link parameter, distributed compensation performed by the device and the optical-electro conversion module for the transmit link can be implemented, thereby reducing a burden on the device for compensating for the second transmit link, effectively improving the signal quality of the optical signal output by the optical-electro conversion module, suppressing the ISI, reducing a bit error rate, and ensuring successful service transmission.

Based on the first aspect, in an optional implementation, the first link parameter is a largest value in a plurality of insertion losses corresponding to the first transmit link, and/or the second link parameter is a largest value in a plurality of insertion losses corresponding to the second transmit link.

In this implementation, the ISI can be suppressed to a maximum extent based on the first link parameter that is the largest value in the plurality of insertion losses corresponding to the first transmit link and the second link parameter that is the largest value in the plurality of insertion losses corresponding to the second transmit link.

Based on the first aspect, in an optional implementation, before the device sends the second electrical signal to the optical-electro conversion module, the method further includes: The device obtains a nonlinear parameter from the optical-electro conversion module. The nonlinear parameter corresponds to the first compensation parameter, and the nonlinear parameter is related to a nonlinear feature of the transmit link. The device performs nonlinear compensation on the first electrical signal or the second electrical signal based on the nonlinear parameter. The nonlinear parameter may be a level shift (Level _shift) parameter, a pattern-dependent lookup table (pattern-dependent lookup table, PD_LUT) parameter, or the like.

In this implementation, the nonlinear feature increases the ISI of the electrical signal transmitted over the transmit link. The device performs nonlinear compensation on the first electrical signal or the second electrical signal based on the nonlinear parameter obtained from the optical-electro conversion module, to suppress the ISI, reduce the bit error rate, and ensure successful service transmission.

According to a second aspect, an embodiment of this application provides a signal transmission method. The method includes: An optical-electro conversion module receives a first compensation parameter from a device. Alternatively, an optical-electro conversion module allocates a first compensation parameter to the optical-electro conversion module. The first compensation parameter is less than a link parameter of a transmit link. The link parameter is used to compensate for an electrical signal transmitted over the transmit link. The transmit link includes a first transmit link and a second transmit link. The device includes a processing chip and a connector. The optical-electro conversion module includes an electro-optical conversion chip. The first transmit link is from the connector to the electro-optical conversion chip, and the second transmit link is from the processing chip to the connector. The optical-electro conversion module receives a second electrical signal from the device. The optical-electro conversion module compensates for the second electrical signal based on the first compensation parameter, to obtain a compensated third electrical signal. The optical-electro conversion module performs electro-optical conversion on the third electrical signal to obtain an optical signal, and the optical-electro conversion module emits the optical signal.

For descriptions of beneficial effects of this aspect, refer to the descriptions shown in the first aspect. Details are not described.

Based on the second aspect, in an optional implementation, after the optical-electro conversion module receives the first compensation parameter from the device, the method further includes: The optical-electro conversion module sends a first coefficient set to the device. The first coefficient set is in a prestored list in the optical-electro conversion module, and corresponds to the first compensation parameter. The prestored list includes M coefficient sets. The first coefficient set is one of the M coefficient sets, and the first coefficient set is used to obtain P tap coefficients. Each of M and P is any integer greater than 1. The first coefficient set is used to compensate for a first electrical signal to obtain the second electrical signal.

Based on the second aspect, in an optional implementation, after the optical-electro conversion module allocates the first compensation parameter to the optical-electro conversion module, the method further includes: The optical-electro conversion module obtains a second coefficient set from the device. The second coefficient set is used to obtain P tap coefficients. P is any integer greater than 1. The optical-electro conversion module convolves a first coefficient set and the second coefficient set to obtain a third coefficient set. The first coefficient set is in a prestored list in the optical-electro conversion module, and corresponds to the first compensation parameter. The prestored list includes M coefficient sets. The first coefficient set is one of the M coefficient sets, and the first coefficient set is used to obtain P tap coefficients. M is any integer greater than 1. The optical-electro conversion module sends the third coefficient set to the device. The third coefficient set is used to compensate for a first electrical signal to obtain the second electrical signal.

Based on the second aspect, in an optional implementation, before the optical-electro conversion module receives the second electrical signal from the device, the method further includes: The optical-electro conversion module allocates a second compensation parameter to the device. The second compensation parameter is less than the link parameter, and the second compensation parameter corresponds to a second coefficient set. The second coefficient set is used to obtain P tap coefficients, and the second coefficient set is used to compensate for a first electrical signal to obtain the second electrical signal.

Based on the second aspect, in an optional implementation, after the optical-electro conversion module receives the first compensation parameter from the device, or after the optical-electro conversion module allocates the first compensation parameter to the optical-electro conversion module, the method further includes: The optical-electro conversion module sends a nonlinear parameter to the device. The nonlinear parameter corresponds to the first compensation parameter, the nonlinear parameter is related to a nonlinear feature of the transmit link, and the nonlinear parameter is used to perform nonlinear compensation on the electrical signal transmitted over the transmit link. According to a third aspect, an embodiment of this application provides a signal transmission method. The method includes: A device compensates for a first electrical signal based on a second compensation parameter, to obtain a compensated second electrical signal. The second compensation parameter is less than a link parameter of a transmit link. The link parameter is used to compensate for an electrical signal transmitted over the transmit link. The transmit link includes a first transmit link and a second transmit link. The device includes a processing chip and a connector. An optical-electro conversion module includes an electro-optical conversion chip. The first transmit link is from the connector to the electro-optical conversion chip, and the second transmit link is from the processing chip to the connector. The device sends the second electrical signal to the optical-electro conversion module.

For descriptions of beneficial effects of this aspect, refer to the descriptions shown in the first aspect. Details are not described.

Based on the third aspect, in an optional implementation, before the device compensates for the first electrical signal based on the second compensation parameter, to obtain the compensated second electrical signal, the method further includes: The device allocates a first compensation parameter to the optical-electro conversion module. The first compensation parameter is less than the link parameter of the transmit link. Alternatively, the device sends a second link parameter of the second transmit link to the optical-electro conversion module. The second link parameter is used to compensate for an electrical signal transmitted over the second transmit link, and the second link parameter is used to obtain a first compensation parameter. Alternatively, the device sends the link parameter to the optical-electro conversion module.

Based on the third aspect, in an optional implementation, before the device compensates for the first electrical signal based on the second compensation parameter, to obtain the compensated second electrical signal, the method further includes: The device obtains a first coefficient set from the optical-electro conversion module. The first coefficient set is used to obtain P tap coefficients. The device convolves the first coefficient set and a second coefficient set to obtain a third coefficient set. The second coefficient set corresponds to the second compensation parameter, and the second coefficient set is used to obtain P tap coefficients. P is any integer greater than 1.

Based on the third aspect, in an optional implementation, before the device compensates for the first electrical signal based on the second compensation parameter, to obtain the compensated second electrical signal, the method further includes: The device sends a second coefficient set to the optical-electro conversion module. The second coefficient set corresponds to the second compensation parameter, and the second coefficient set is used to obtain P tap coefficients. P is any integer greater than 1. The device obtains a third coefficient set from the optical-electro conversion module. The third coefficient set is used to obtain P tap coefficients.

Based on the third aspect, in an optional implementation, that the device compensates for the first electrical signal based on the second compensation parameter, to obtain the compensated second electrical signal includes: An FFE of the device compensates for the first electrical signal based on the third coefficient set, to obtain the second electrical signal.

Based on the third aspect, in an optional implementation, that the device compensates for the first electrical signal based on the second compensation parameter, to obtain the compensated second electrical signal includes: The device obtains the second compensation parameter. The second compensation parameter is less than the link parameter. The device obtains a second coefficient set corresponding to the second compensation parameter. The second coefficient set is used to obtain P tap coefficients, and P is any integer greater than 1. An FFE of the device compensates for the first electrical signal based on the second coefficient set, to obtain the second electrical signal.

Based on the third aspect, in an optional implementation, before the device sends the second electrical signal to the optical-electro conversion module, the method further includes: The device obtains a nonlinear parameter from the optical-electro conversion module. The nonlinear parameter is related to a nonlinear feature of the transmit link. The device performs nonlinear compensation on the first electrical signal or the second electrical signal based on the nonlinear parameter.

According to a fourth aspect, an embodiment of this application provides a communication system. The communication system includes a housing. A device and an optical-electro conversion module are fastened in the housing. The device includes a processing chip and a connector. The optical-electro conversion module includes a compensation module, an electro-optical conversion chip, and an output optical fiber that are sequentially connected. The optical-electro conversion module further includes a control chip that is separately connected to the compensation module and the electro-optical conversion chip. The processing chip is connected to the compensation module through the connector. The processing chip or the control chip is configured to allocate a first compensation parameter to the compensation module. The first compensation parameter is less than a link parameter of a transmit link. The link parameter is used to compensate for an electrical signal transmitted over the transmit link. The transmit link includes a first transmit link and a second transmit link. The first transmit link is from the connector to the electro-optical conversion chip, and the second transmit link is from the processing chip to the connector. The processing chip is configured to compensate for a first electrical signal based on a second compensation parameter, to obtain a compensated second electrical signal. The second compensation parameter is less than the link parameter of the transmit link. The processing chip is configured to send the second electrical signal to the compensation module through the connector. The compensation module is configured to compensate for the second electrical signal based on the first compensation parameter, to obtain a compensated third electrical signal. The electro-optical conversion chip is configured to perform electro-optical conversion on the third electrical signal to obtain an optical signal. The output optical fiber is configured to emit the optical signal.

For descriptions of beneficial effects of this aspect, refer to the descriptions shown in the first aspect. Details are not described.

According to a fifth aspect, an embodiment of this application provides an optical-electro conversion module. The optical-electro conversion module includes a compensation module, an electro-optical conversion chip, and an output optical fiber that are sequentially connected. The optical-electro conversion module further includes a control chip that is separately connected to the compensation module and the electro-optical conversion chip. The compensation module is connected to a connector of a device. The compensation module is configured to receive a first compensation parameter from the device through the connector, or the control chip is configured to allocate a first compensation parameter to the compensation module. The first compensation parameter is less than a link parameter of a transmit link. The link parameter is used to compensate for an electrical signal transmitted over the transmit link. The transmit link includes a first transmit link and a second transmit link. The device further includes a processing chip. The first transmit link is from the connector to the electro-optical conversion chip, and the second transmit link is from the processing chip to the connector. The compensation module is further configured to: receive a second electrical signal from the device through the connector, and compensate for the second electrical signal based on the first compensation parameter, to obtain a compensated third electrical signal. The electro-optical conversion chip is configured to perform electro-optical conversion on the third electrical signal to obtain an optical signal. The output optical fiber is configured to emit the optical signal.

For descriptions of beneficial effects of this aspect, refer to the descriptions shown in the first aspect. Details are not described.

According to a sixth aspect, an embodiment of this application provides a device. The device includes a housing. The device is fastened in the housing. The device includes a processing chip and a connector. The processing chip is connected to an optical-electro conversion module through the connector. The processing chip is configured to compensate for a first electrical signal based on a second compensation parameter, to obtain a compensated second electrical signal. The second compensation parameter is less than a link parameter of a transmit link. The link parameter is used to compensate for an electrical signal transmitted over the transmit link. The transmit link includes a first transmit link and a second transmit link. The optical-electro conversion module includes an electro-optical conversion chip. The first transmit link is from the connector to the electro-optical conversion chip, and the second transmit link is from the processing chip to the connector. The processing chip is further configured to send the second electrical signal to the optical-electro conversion module through the connector.

For descriptions of beneficial effects of this aspect, refer to the descriptions shown in the first aspect. Details are not described.

According to a seventh aspect, an embodiment of this application provides a digital processing chip, including a processing chip and a memory. The memory and the processing chip are interconnected through a line. The memory stores instructions, and the processing chip is configured to perform the method in any one of the implementations of the first aspect to the third aspect.

According to an eighth aspect, an embodiment of this application provides a computer storage medium, including instructions. When the instructions are run on a computer, the computer is enabled to perform the method in any one of the implementations of the first aspect to the third aspect.

According to a ninth aspect, an embodiment of this application provides a computer program product including instructions. When the computer program product is run on a computer, the computer is enabled to perform the method in any one of the implementations of the first aspect to the third aspect.

According to a tenth aspect, an embodiment of this application provides an optical network. The optical network includes a first device and a second device. The first device is configured to send an optical signal to the second device, and the first device is shown in any one of the implementations of the fourth aspect or the sixth aspect.

### BRIEF DESCRIPTION OF DRAWINGS

FIG. 1 is an example diagram of a structure of an optical network;
FIG. 2 is an example diagram of a structure of a first embodiment of a communication system according to this application;
FIG. 3 is a flowchart of steps of a first embodiment of a signal transmission method according to this application;
FIG. 4 is an example diagram of comparison between an eye pattern of an optical signal emitted by an optical-electro conversion module according to this application and an eye pattern of an optical signal emitted by an optical-electro conversion module according to an existing solution;
FIG. 5 is a flowchart of steps of a second embodiment of a signal transmission method according to this application;
FIG. 6A and FIG. 6B are a flowchart of steps of a third embodiment of a signal transmission method according to this application;
FIG. 7 is a flowchart of steps of a fourth embodiment of a signal transmission method according to this application;
FIG. 8 is an example diagram of a structure of a second embodiment of a communication system according to this application;
FIG. 9 is a flowchart of steps of a fifth embodiment of a signal transmission method according to this application;
FIG. 10 is a flowchart of steps of a sixth embodiment of a signal transmission method according to this application;
FIG. 11 is an example diagram of a structure of a third embodiment of a communication system according to this application;
FIG. 12 is an example diagram of a structure of a fourth embodiment of a communication system according to this application;
FIG. 13 is an example diagram of a structure of a fifth embodiment of a communication system according to this application;
FIG. 14 is an example diagram of a structure of a sixth embodiment of a communication system according to this application;
FIG. 15a is an example diagram of a first packaging structure of an optical-electro conversion module according to this application;
FIG. 15b is an example diagram of a second packaging structure of an optical-electro conversion module according to this application;
FIG. 15c is an example diagram of a third packaging structure of an optical-electro conversion module according to this application;
FIG. 15d is an example diagram of a third packaging structure of an optical-electro conversion module according to this application;
FIG. 15e is an example diagram of a fourth packaging structure of an optical-electro conversion module according to this application;
FIG. 15f is an example diagram of a fifth packaging structure of an optical-electro conversion module according to this application;
FIG. 16 is an example diagram of a structure of an embodiment of a TX interface of a device according to this application; and
FIG. 17 is an example diagram of a structure of an embodiment of a compensation module of an optical-electro conversion module according to this application.

### DESCRIPTION OF EMBODIMENTS

The following clearly and completely describes the technical solutions in embodiments of this application with reference to the accompanying drawings in embodiments of this application. Clearly, the described embodiments are merely some but not all of embodiments of this application. All other embodiments obtained by a person skilled in the art based on embodiments of this application without creative efforts shall fall within the protection scope of this application.

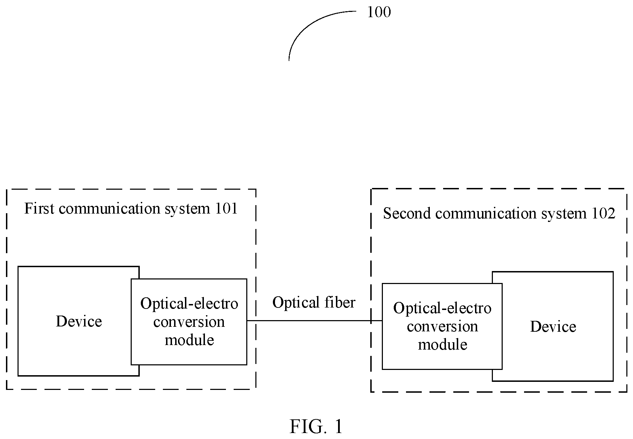

Embodiments of this application provide a signal transmission method, to effectively suppress ISI of a signal, reduce a bit error rate, and improve signal quality of the signal. With reference to FIG. 1, the following describes an optical network and a communication system to which the method shown in embodiments is applied. An optical network 100 includes a first communication system 101 and a second communication system 102. The first communication system 101 and the second communication system 102 are connected through an optical fiber. A quantity of communication systems included in the optical network 100 is not limited in this example. For example, the first communication system 101 may be connected to a plurality of second communication systems 102 through an optical splitter. A networking type of the optical network is not limited in this example. For example, the optical network may use ring networking, star networking, or the like. A type of a network to which the optical network 100 is applied is not limited in this example. For example, if the optical network 100 shown in this example is applied to a passive optical network (passive optical network, PON), one of the first communication system 101 and the second communication system 102 may be an optical network unit (optical network unit, ONU) or an optical network terminal (optical network terminal, ONT), and the other of the first communication system 101 and the second communication system 102 may be an optical line terminal (optical line terminal, OLT). If the optical network 100 is applied to an optical transport network (optical transport network, OTN), both the first communication system 101 and the second communication system 102 may be OTN devices. The optical network 100 shown in this example may be further applied to a data center network (data center network, DCN), a metropolitan area network, or the like. This is not specifically limited. The first communication system 101 is used as an example. A device type of the first communication system 101 is not limited in this example. For example, the first communication system 101 may be an optical transmission device, an optical access device, a router, a switch, a wireless base station, a wireless remote access device, a radio baseband signal processing device, or the like, or may be a computing server (usually briefly referred to as a server), a high-performance computer (high-performance computer, HPC), a storage server, a memory resource pool, or the like. The type of the first communication system 101 is not limited in this example, provided that the first communication system 101 has an electro-optical conversion function and has an optical interface that can be connected to the optical fiber. For descriptions of a type of the second communication system 102, refer to the descriptions of the first communication system 101. Details are not described.

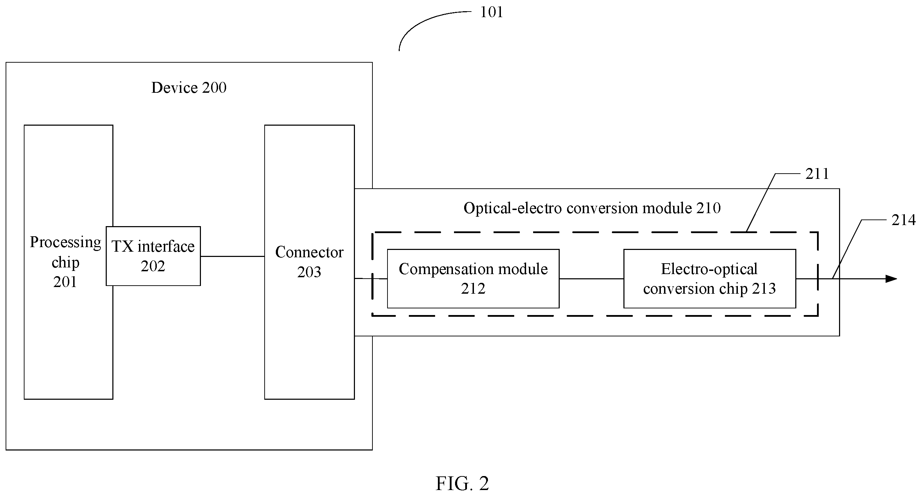

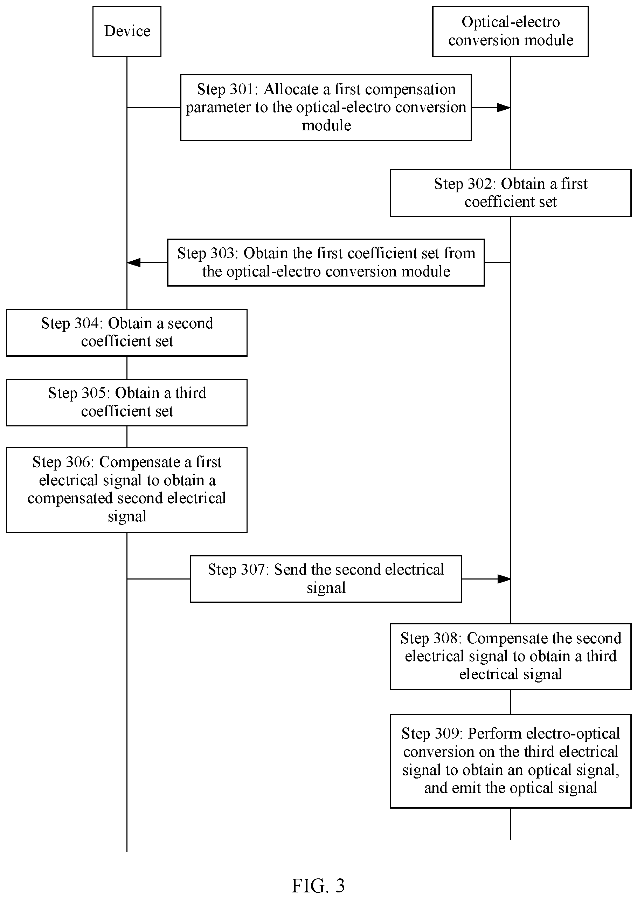

Structures of the first communication system and the second communication system are described with reference to FIG. 1 and FIG. 2. FIG. 2 is an example diagram of a structure of a first embodiment of a communication system according to this application. For example, the communication system shown in FIG. 2 is a first communication system. The first communication system 101 includes a device 200 and one or more optical-electro conversion modules 210. The optical-electro conversion module may also be referred to as an optical transceiver module, an optical module, or the like. A quantity of devices 200 included in the first communication system 101 is not limited in this example. The device 200 and the first communication system 101 are an integrated device, or the device 200 is an independent pluggable board. A quantity of optical-electro conversion modules 210 included in the first communication system 101 is not limited in this example. The optical-electro conversion module 210 may be integrated with the device 200, may be detachably connected to a board of the device 200, or the like. This is not specifically limited. Specifically, a processing chip 201 and a connector 203 are packaged in the device 200. The processing chip 201 may be one or more chips or one or more integrated circuits. For another example, the processing chip 201 may be one or more optical digital signal processors (optical digital signal processor, oDSP), a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a microprocessor (microcontroller unit, MCU), a programmable processor (programmable logic device, PLD), a network adapter chip, a storage interface chip, another integrated chip, or any combination of the foregoing chips or processing modules, or the like. Details are not described. The processing chip 201 has a TX interface 202, and the TX interface 202 is connected to the connector 203. The connector 203 is configured to provide an electrical interface, and the electrical interface implements a detachable electrical connection to the optical-electro conversion module 210. The optical-electro conversion module 210 includes a transmit (transmit, TX) channel 211. The transmit channel 211 includes a compensation module 212, an electro-optical conversion chip 213, and an output optical fiber 214 that are sequentially connected. The electro-optical conversion chip 213 performs electro-optical conversion on an electrical signal from the compensation module 212. For example, the electro-optical conversion chip 213 may be a directly modulated laser (directly modulated laser, DML), an electro-absorption modulated laser (electro-absorption modulated laser, EML), or a vertical-cavity surface-emitting laser (vertical-cavity surface-emitting laser, VCSEL). For another example, the electro-optical conversion chip 213 may alternatively be of a structure of a laser and a modulator, and the modulator may be a Mach-Zehnder modulator (Mach-Zehnder modulator, MZM), a microring modulator (microring modulator, MRM), or the like. Based on FIG. 1 and FIG. 2, the following describes an execution process of the signal transmission method with reference to embodiments. FIG. 3 is a flowchart of steps of a first embodiment of a signal transmission method according to this application.

Step 301: A device allocates a first compensation parameter to an optical-electro conversion module.

After the optical-electro conversion module is inserted into a connector of the device and powered on, the device may allocate the first compensation parameter. The following describes several optional examples of allocating the first compensation parameter by the device.

### Allocation example 1

First, the device obtains a link parameter.

Specifically, the optical-electro conversion module prestores a first link parameter of a first transmit link. As shown in FIG. 2, an input end of the first transmit link is a position at which the optical-electro conversion module 210 is electrically connected to the connector 203. An output end of the first transmit link is a position at which an electro-optical conversion chip 213 is connected to an output optical fiber 214. It should be noted that the descriptions of the first transmit link in this embodiment are an optional example, and are not limited, provided that the first transmit link transmits an electrical signal from the device 200, and transmits an optical signal obtained by performing electro-optical conversion on the electrical signal, and the optical signal can be emitted from the optical-electro conversion module 210 over the first transmit link. The first link parameter may be obtained through testing before the optical-electro conversion module is delivered from a factory, or may be obtained by simulating hardware included in the first transmit link. The hardware included in the first transmit link may include a printed circuit board (printed circuit board, PCB), a high-speed signal trace structure, a width, and a thickness of the PCB, and the like. This is not specifically limited. In this embodiment, an example in which the first link parameter is an insertion loss introduced in a process in which a signal is transmitted over the first transmit link is used. The descriptions of the first link parameter in this embodiment are an optional example, and are not limited. For example, the first link parameter may alternatively be a time domain impulse response coefficient or a frequency domain impulse response coefficient. The time domain impulse response coefficient is a time domain response coefficient obtained in a process in which a signal is transmitted over the first transmit link. The frequency domain impulse response coefficient is a frequency domain response coefficient obtained in a process in which a signal is transmitted over the first transmit link.

The device prestores a second link parameter of a second transmit link. As shown in FIG. 2, an input end of the second transmit link is a TX interface 202, and the TX interface 202 is connected to the connector 203 through a communication bus. An output end of the second transmit link is a position at which the communication bus is electrically connected to the connector 203. It should be noted that the descriptions of the second transmit link in this embodiment are an optional example, provided that the second transmit link transmits an electrical signal from a processing chip 201 and transmits the electrical signal to the connector 203. For descriptions of storing the second link parameter by the device, refer to the descriptions of storing the first link parameter by the optical-electro conversion module. Details are not described. For descriptions of the second link parameter, refer to the descriptions of the first link parameter. Details are not described.

The device obtains the second link parameter from a register of the processing chip 201, and obtains the first link parameter from a register of the optical-electro conversion module. The device obtains the link parameter based on the first link parameter and the second link parameter. The link parameter is greater than or equal to a sum of the first link parameter and the second link parameter.

The descriptions of the manner of obtaining the link parameter by the device shown in this example are an optional example, and are not limited. For example, the device may alternatively prestore the link parameter. When the device needs to allocate the first compensation parameter, the device directly obtains the stored link parameter.

Then, the device obtains the first compensation parameter based on the link parameter.

After obtaining the link parameter, the device obtains the first compensation parameter based on a preset allocation rate. For an allocation process, refer to Table 1.

**Table 1**

| Allocation rate corresponding to the first compensation parameter |
|---|
| Q1 |

Based on Table 1, the device obtains the first compensation parameter=link parameter*Q1, where Q1 is any value greater than 0 and less than 1. A specific value of Q1 is not limited in this embodiment. For example, a value of Q1 is 50%. For another example, a value of Q1 is 40%. In this embodiment, an example in which the value of Q1 is 50% is used for description. For example, if the first compensation parameter obtained by the device is 14 decibels (dB), the device determines that the first compensation parameter is 7 dB. The device sends the first compensation parameter to the optical-electro conversion module. It may be understood that the first compensation parameter shown in this embodiment is less than the link parameter.

### Allocation example 2

In this allocation example, the first compensation parameter is allocated by using an allocation algorithm. For descriptions of obtaining a link parameter by the device shown in this example, refer to the allocation example 1. Details are not described.

First, the optical-electro conversion module obtains parameters shown in Table 2, to allocate the first compensation parameter.

**Table 2**

| Maximum compensation link parameter of the optical-electro conversion module | Maximum compensation link parameter of a TX interface of the device | Link parameter |
|---|---|---|
| B | A | C |

Specifically, the optical-electro conversion module obtains the maximum compensation link parameter B of the optical-electro conversion module. The optical-electro conversion module obtains the maximum compensation link parameter A of the TX interface of the device. The optical-electro conversion module obtains the link parameter C. The optical-electro conversion module obtains the first compensation parameter X based on a first allocation algorithm, where X is closest to C*B/(A+B).

In this embodiment, the optical-electro conversion module can compensate, based on the first compensation parameter, an electrical signal transmitted over the first transmit link. Specifically, the optical-electro conversion module amplifies a high-frequency signal and attenuates a low-frequency signal in the electrical signal transmitted over the first transmit link, based on the first compensation parameter, to suppress ISI of the electrical signal transmitted over the first transmit link.

Step 302: The optical-electro conversion module obtains a first coefficient set.

After receiving the first compensation parameter, the optical-electro conversion module shown in this embodiment obtains a continuous time linear equalizer (continuous time linear equalizer, CTLE) level corresponding to the first compensation parameter. With reference to FIG. 2, a compensation module 212 of the optical-electro conversion module includes a CTLE. The optical-electro conversion module compensates for the electrical signal from the device through the CTLE. A frequency response (frequency response) of a compensated electrical signal output from the CTLE is determined based on different levels of the CTLE, and may be briefly referred to as a frequency response, or may be referred to as a frequency response curve. The frequency response of the electrical signal is a curve of a change of a gain of the electrical signal with a frequency. When obtaining the first compensation parameter, the optical-electro conversion module may obtain the CTLE level corresponding to the first compensation parameter. For example, when the first compensation parameter is 7 dB, the CTLE level that is obtained by the optical-electro conversion module and that corresponds to the first compensation parameter is 7. This example shows that when the CTLE level 7 is configured for the CTLE, the CTLE can compensate for the 7 dB insertion loss caused by transmission of an electrical signal over the first transmit link. It should be noted that the descriptions of a specific correspondence between the first compensation parameter and the CTLE level in this embodiment are an optional example, and are not limited, provided that the optical-electro conversion module pre-creates a correspondence between different first compensation parameters and CTLE levels. A quantity of CTLE levels included in the CTLE of the optical-electro conversion module is not limited in this embodiment. For example, 11 different CTLE levels may be included.

When the optical-electro conversion module obtains the CTLE level, a corresponding first coefficient set may be obtained by querying a prestored list shown in Table 3.

**Table 3**

| CTLE level of the optical-electro conversion module | Coefficient set |
|---|---|
| 0 | [xxx, xxx, ..., xxx, xxx] |
| 1 | [xxx, xxx, ..., xxx, xxx] |
| 2 | [xxx, xxx, ..., xxx, xxx] |
| 3 | [xxx, xxx, ..., xxx, xxx] |
| 4 | [xxx, xxx, ..., xxx, xxx] |
| 5 | [xxx, xxx, ..., xxx, xxx] |
| 6 | [xxx, xxx, ..., xxx, xxx] |
| 7 | [0.0019, 0.0095, -0.086, 0.6841, 0.1665, 0.0382, 0.0138] |
| 8 | [xxx, xxx, ..., xxx, xxx] |
| 9 | [xxx, xxx, ..., xxx, xxx] |
| 10 | [xxx, xxx, ..., xxx, xxx] |

A correspondence between CTLE levels of the optical-electro conversion module and different coefficient sets is created in the prestored list shown in Table 3. The CTLE level of the optical-electro conversion module corresponds to the first compensation parameter. For example, when the first compensation parameter is 7 dB, the corresponding CTLE level of the optical-electro conversion module in the prestored list in Table 3 is 7. In this embodiment, an example in which the corresponding first compensation parameter is equal to a value of the CTLE level is used. In another example, the corresponding first compensation parameter may be different from the value of the CTLE level. In this embodiment, an example in which a correspondence between different first compensation parameters and coefficient sets is created in the prestored list by using the CTLE level of the optical-electro conversion module is used. In another example, the correspondence between different first compensation parameters and coefficient sets may be directly created in the prestored list shown in Table 3. This is not specifically limited in this embodiment. The prestored list shown in this embodiment includes M coefficient sets. In this embodiment, an example in which a value of M is 11 is used. The value of M is not specifically limited, provided that M is any integer greater than 1.

Each coefficient set in the prestored list includes N tap coefficients. In this embodiment, an example in which a value of N is 7 is used. The value of N is not specifically limited, provided that N is any integer greater than 1. A feed-forward equalizer (feed-forward equalizer, FFE) of the device compensates, by using the tap coefficient, an electrical signal to be sent to the optical-electro conversion module, to reduce ISI caused by the second transmit link. It may be understood that different coefficient sets shown in Table 3 include different N tap coefficients, and the different N tap coefficients can enable the FFE of the device to perform different compensation. For example, when the optical-electro conversion module shown in this embodiment receives the first compensation parameter (for example, 7 dB), the corresponding first coefficient set is obtained from Table 3, and seven tap coefficients included in the first coefficient set are 0.0019, 0.0095, -0.086, 0.6841, 0.1665, 0.0382, and 0.0138.

The descriptions of the prestored list in this embodiment are an optional example, and are not limited, provided that the correspondence between different first compensation parameters and coefficient sets is created in the prestored list. For another example, for the prestored list shown in this embodiment, refer to Table 4.

**Table 4**

| CTLE level of the optical-electro conversion module | Coefficient set at a first temperature | Coefficient set at a second temperature | Coefficient set at a third temperature |
|---|---|---|---|
| 0 | [xxx, xxx, ..., xxx, xxx] | [xxx, xxx, ..., xxx, xxx] | [xxx, xxx, ..., xxx, xxx] |
| 1 | [xxx, xxx, ..., xxx, xxx] | [xxx, xxx, ..., xxx, xxx] | [xxx, xxx, ..., xxx, xxx] |
| 2 | [xxx, xxx, ..., xxx, xxx] | [xxx, xxx, ..., xxx, xxx] | [xxx, xxx, ..., xxx, xxx] |
| 3 | [xxx, xxx, ..., xxx, xxx] | [xxx, xxx, ..., xxx, xxx] | [xxx, xxx, ..., xxx, xxx] |
| 4 | [xxx, xxx, ..., xxx, xxx] | [xxx, xxx, ..., xxx, xxx] | [xxx, xxx, ..., xxx, xxx] |
| 5 | [xxx, xxx, ..., xxx, xxx] | [xxx, xxx, ..., xxx, xxx] | [xxx, xxx, ..., xxx, xxx] |
| 6 | [xxx, xxx, ..., xxx, xxx] | [xxx, xxx, ..., xxx, xxx] | [xxx, xxx, ..., xxx, xxx] |
| 7 | [xxx, xxx, ..., xxx, xxx] | [0.0019, 0.0095, -0.086, 0.6841, 0.1665, 0.0382, 0.0138] | [xxx, xxx, ..., xxx, xxx] |
| 8 | [xxx, xxx, ..., xxx, xxx] | [xxx, xxx, ..., xxx, xxx] | [xxx, xxx, ..., xxx, xxx] |
| 9 | [xxx, xxx, ..., xxx, xxx] | [xxx, xxx, ..., xxx, xxx] | [xxx, xxx, ..., xxx, xxx] |
| 10 | [xxx, xxx, ..., xxx, xxx] | [xxx, xxx, ..., xxx, xxx] | [xxx, xxx, ..., xxx, xxx] |

In the prestored list shown in Table 4, a correspondence between the first compensation parameter and the coefficient set at different temperatures is created. The first temperature (a current ambient temperature of the optical-electro conversion module is a low-temperature environment) means that the temperature is between -5 degrees Celsius and 20 degrees Celsius. The second temperature (the current ambient temperature of the optical-electro conversion module is a normal-temperature environment) means that the temperature is between 20 degrees Celsius and 40 degrees Celsius. The third temperature (the current ambient temperature of the optical-electro conversion module is a high-temperature environment) means a temperature above 40 degrees Celsius. A temperature sensor may be further integrated into the optical-electro conversion module shown in this embodiment, and is configured to detect the current ambient temperature of the optical-electro conversion module. If the first compensation parameter obtained by the optical-electro conversion module is 7 dB, and the ambient temperature detected by the temperature sensor is 25 degrees Celsius, the optical-electro conversion module determines that it is currently at the second temperature shown in Table 4, and a first coefficient set that is obtained by the optical-electro conversion module from the prestored list shown in Table 4 and that corresponds to the first compensation parameter (7 dB) and the ambient temperature (25 degrees Celsius) is 0.0019, 0.0095, -0.086, 0.6841, 0.1665, 0.0382, and 0.0138.

When the optical-electro conversion module is at different ambient temperatures, channel responses exhibited during signal transmission over a transmit link are inconsistent. Therefore, to implement accurate signal compensation and reduce ISI of the transmit link, the optical-electro conversion module obtains, based on the prestored list shown in Table 4, the first coefficient set corresponding to both the first compensation parameter and the current ambient temperature. The transmit link includes the first transmit link and the second transmit link that are shown above. After obtaining the first coefficient set, the optical-electro conversion module shown in this embodiment stores the obtained first coefficient set in the register of the optical-electro conversion module by using a data structure shown in Table 5.

**Table 5**

| Tap (Tap) position | Tap coefficient |
|---|---|
| TAP1 | 0.0019 |
| TAP2 | 0.0095 |
| TAP3 | -0.0860 |
| TAP4 | 0.6841 |
| TAP5 | 0.1665 |
| TAP6 | 0.0382 |
| TAP7 | 0.0138 |

It may be understood that Table 5 stores a correspondence between different tap coefficients and corresponding tap positions in the first coefficient set, to perform FFE compensation on a device side. It should be noted that in the seven taps, only one tap is a largest value and is defined as a main tap, and taps before and after the main tap are respectively referred to as a pre tap and a post tap. Quantities of pre taps and post taps may be determined based on a compensation requirement of the transmit link, and there is no mandatory requirement for the post tap. The quantities of pre taps and post taps are equal. As shown in Table 5, only an example in which the quantities of pre taps and post taps are equal and both are 3 is used for description.

Step 303: The device obtains the first coefficient set from the optical-electro conversion module.

After obtaining the first coefficient set shown in Table 5, the optical-electro conversion module writes the first coefficient set into the register. The device reads the first coefficient set shown in Table 5 from a register of a control chip through a communication bus.

Step 304: The device obtains a second coefficient set.

The device shown in this embodiment prestores the second coefficient set. The second coefficient set includes P tap coefficients, and P is any integer greater than 1. The second coefficient set shown in this embodiment corresponds to a second compensation parameter, and the second compensation parameter is less than the link parameter shown above. That the second coefficient set corresponds to the second compensation parameter means that the device can implement compensation of the second compensation parameter for the second transmit link when compensating, based on the P tap coefficients included in the second coefficient set, an electrical signal transmitted over the second transmit link. For example, if the second compensation parameter is an insertion loss and is 7 dB, the device can compensate for the 7 dB insertion loss of the second transmit link when compensating, based on the P tap coefficients included in the second coefficient set, the electrical signal transmitted over the second transmit link. A sum of the first compensation parameter and the second compensation parameter shown in this embodiment is not less than the link parameter. It may be learned from the foregoing descriptions that the first coefficient set includes N tap systems. In this embodiment, an example in which values of N and P are equal is used. In another example, the values of N and P may be unequal. This is not specifically limited. In this embodiment, an example in which both the values of N and P are 7 is used. For example, the tap coefficients included in the second coefficient set shown in this embodiment are - 0.0018, 0.0044, -0.0489, 0.5738, -0.3021, 0.0407, and -0.0284.

Step 305: The device obtains a third coefficient set based on the first coefficient set and the second coefficient set.

When the device obtains the first coefficient set and the second coefficient set, the device convolves the first coefficient set and the second coefficient set, and selects middle P (for example, P=7) tap coefficients as the third coefficient set. For example, for the third coefficient set obtained by the device by convolving the first coefficient set and the second coefficient set, refer to Table 6.

**Table 6**

| Tap position | Tap coefficient |
|---|---|
| TAP1 | -0.0015 |
| TAP2 | 0.0181 |
| TAP3 | -0.1304 |
| TAP4 | 0.6310 |
| TAP5 | -0.1792 |
| TAP6 | 0.0019 |
| TAP7 | -0.0250 |

It may be understood that the third coefficient set obtained by the device includes seven tap coefficients: -0.0015, 0.0181, -0.1304, 0.6310, -0.1792, 0.0019, and -0.0250.

Step 306: The device compensates for a first electrical signal to obtain a compensated second electrical signal.

The device obtains the first electrical signal to be sent to the optical-electro conversion module. A pattern of the first electrical signal is not limited in this embodiment. For example, the pattern of the first electrical signal may be non-return-to-zero (non-return-to-zero, NRZ), pulse amplitude modulation (pulse amplitude modulation, PAM) 2, PAM4, PAM6, PAM8, X-phase shift keying (phase shift keying, PSK), binary phase shift keying (binary phase shift keying, BPSK), quadrature phase shift keying (quadrature phase shift keying, QPSK), x-quadrature amplitude modulation (quadrature amplitude modulation, QAM), or the like. In this embodiment, an example in which the first electrical signal is an electrical signal whose rate is 112 gigabits/second (Gbps) and pattern is PAM4 is used.

When obtaining the third coefficient set shown in Table 6, the device compensates for the first electrical signal based on the third coefficient set. Specifically, the TX interface of the device includes an FFE. The FFE compensates for the first electrical signal based on the third coefficient set, to obtain the compensated second electrical signal. When being transmitted over the second transmit link of the device, the first electrical signal experiences high-frequency distortion (in a phase and an amplitude), and the distortion causes ISI. The FFE compensates for the first electrical signal based on the third coefficient set, to suppress the ISI and other caused distortion. For example, the FFE compensates for channel attenuation in the second transmit link by enhancing a high frequency of the first electrical signal. The third coefficient set shown in this embodiment includes seven tap coefficients. Therefore, the FFE has seven inputs, which are 7 sequentially sent bits in the first electrical signal. The 7 sequentially input bits are vin(n-3), vin(n-2), vin(n-1), vin(n), vin(n+1), vin(n+2), and vin(n+3). The FFE adds the 7 bits based on a specific weight, and then outputs the bits as the second electrical signal. The second electrical signal is vout(n)=(C-3)vin(n-3)+(C-2)vin(n-2)+(C-1)vin(n-1)+Cvin(n)+C(n+1)vin(n+1)+C(n+2)vin(n+2)+C(n+3)vin(n+3). Herein, C-3 is a tap coefficient, that is, -0.0015, corresponding to the tap position TAP1 in Table 6, C-2 is a tap coefficient, that is, 0.0181, corresponding to the tap position TAP2 in Table 6, and by analogy, C+3 is a tap coefficient, that is, -0.0250, corresponding to the tap position TAP7 in Table 6.

Step 307: The device sends the second electrical signal to the optical-electro conversion module.

The TX interface of the device compensates for the first electrical signal to obtain the second electrical signal, and the TX interface sends the second electrical signal to the optical-electro conversion module through the connector.

Step 308: The optical-electro conversion module compensates for the second electrical signal to obtain a compensated third electrical signal.

It may be learned from the descriptions of step 302 that the optical-electro conversion module configures the level of the CTLE based on the first coefficient set. In this case, the CTLE for which the CTLE level is configured can compensate for the second electrical signal to obtain the third electrical signal. For descriptions of performing compensation by the CTLE based on the level, refer to step 302. Details are not described.

Step 309: The optical-electro conversion module performs electro-optical conversion on the third electrical signal to obtain an optical signal, and emits the optical signal.

Still with reference to FIG. 2, the compensation module 212 compensates for the second electrical signal to obtain the third electrical signal, and sends the third electrical signal to the electro-optical conversion chip 213. The electro-optical conversion chip 213 performs electro-optical conversion on the third electrical signal to obtain an optical signal. The electro-optical conversion chip 213 sends the optical signal to the output optical fiber 214, and the optical signal is output from the optical-electro conversion module 210 through the output optical fiber.

In the embodiment shown in FIG. 3, an example in which the device allocates the first compensation parameter based on the link parameter of the transmit link is used. This is not specifically limited. For example, the device may alternatively directly allocate the first compensation parameter based on the second link parameter of the second transmit link of the device.

First, the device obtains the second link parameter (for example, 12 dB) of the second transmit link.

Then, the device allocates the first compensation parameter (for example, 5 dB) to the optical-electro conversion module based on the second link parameter. It may be understood that the device directly allocates the first compensation parameter based on the second link parameter (for example, 12 dB) of the device, to ensure that the first compensation parameter is less than the second link parameter. It may be understood that if the device independently compensates for the 12 dB insertion loss for the second transmit link, a burden is heavy, and ISI of the electrical signal transmitted over the second transmit link is increased. Therefore, the device uses a distributed compensation manner to reduce the insertion loss for which the device compensates. In this example, the device enables the optical-electro conversion module to share 5 dB in the 12 dB, and the device shares 7 dB in the 12 dB, thereby effectively reducing the burden on the device for compensating for the second transmit link, and improving signal quality.

Then, the optical-electro conversion module reads the register to obtain the first compensation parameter based on which the optical-electro conversion module needs to compensate for the electrical signal transmitted over the first transmit link.

Then, the optical-electro conversion module compensates for the second electrical signal based on the first compensation parameter, to obtain the third electrical signal. For a process in which the optical-electro conversion module compensates for the second electrical signal based on the first compensation parameter, refer to step 308. Details are not described.

Optionally, if the optical-electro conversion module needs to compensate for the electrical signal transmitted over the first transmit link with a third compensation parameter (for example, 1 dB), the optical-electro conversion module obtains a fourth compensation parameter based on the first compensation parameter and the third compensation parameter. The fourth compensation parameter is a sum of the first compensation parameter and the fourth compensation parameter. For example, the fourth compensation parameter shown in this example is 5 dB+1 dB=6 dB. The 5 dB (that is, the first compensation parameter) is a parameter for the optical-electro conversion module to compensate for the electrical signal transmitted over the second transmit link of the device, and the 1 dB (that is, the third compensation parameter) is a parameter for the optical-electro conversion module to compensate for the electrical signal.

Then, the optical-electro conversion module compensates for the second electrical signal based on the fourth compensation parameter, to obtain the third electrical signal. For a process in which the optical-electro conversion module compensates for the second electrical signal based on the fourth compensation parameter, refer to the process that is shown in step 308 and in which the optical-electro conversion module compensates for the second electrical signal based on the first compensation parameter. Details are not described.

A plurality of optical-electro conversion modules may be inserted into the device shown in this embodiment. Each optical-electro conversion module may include a plurality of TX channels. For a process of performing signal transmission between each TX channel of each optical-electro conversion module and the device, refer to FIG. 3. Details are not described.

According to the method shown in this embodiment, to compensate for the electrical signal transmitted over the transmit link (including the first transmit link and the second transmit link), the device obtains the link parameter required for compensating for the electrical signal transmitted over the transmit link, and allocates the first compensation parameter to the optical-electro conversion module in the distributed compensation manner. Based on the distributed compensation manner, the device and the optical-electro conversion module jointly compensate for the electrical signal transmitted over the transmit link. In addition, the optical-electro conversion module prestores a plurality of coefficient sets. The optical-electro conversion module sends the first coefficient set to the device based on the first compensation parameter. The device obtains the second coefficient set, and convolves the first coefficient set and the second coefficient set to obtain the third coefficient set. The FFE of the device performs compensation by using the third coefficient set, thereby effectively reducing ISI of the electrical signal transmitted over the transmit link, and improving signal quality.

As shown in this embodiment, the distributed compensation manner is used for the electrical signal transmitted over the transmit link, that is, the optical-electro conversion module compensates for the electrical signal transmitted over the first transmit link, and the device compensates for the electrical signal transmitted over the second transmit link. Therefore, signal quality of the optical signal output by the optical-electro conversion module is effectively improved, ISI is effectively suppressed, and it is ensured that the optical signal output by the optical-electro conversion module meets a requirement of a related standard, for example, meets an index requirement defined by the institute of electrical and electronics engineers (institute of electrical and electronics engineers, IEEE). According to the method shown in this embodiment, a transmitter and dispersion eye closure for PAM4 (transmitter and dispersion eye closure for PAM4, TDECQ) index of the optical signal emitted by the optical-electro conversion module can be effectively improved. In this example, the output optical fiber may be connected to an optical eye pattern analyzer. The optical eye pattern analyzer receives the optical signal from the optical-electro conversion module through the output optical fiber, and simulates the optical signal to obtain a TDECQ index and a corresponding eye pattern. The following provides descriptions with reference to Table 7.

**Table 7**

| Used solution | Tap coefficient used by the FFE | TDECQ index |
|---|---|---|
| Emit the optical signal by using the method corresponding to FIG. 3 | [-0.0015, 0.0181, -0.1304, 0.6310, - 0.1792, 0.0019, -0.0250] | 1.05 |
| Emit the optical signal by using an existing method (that is, only the device compensates for the electrical signal transmitted over the transmit link) | [-0.0018, 0.0044, -0.0489, 0.5738, - 0.3021, 0.0407, -0.0284] | 3.7 |

The tap systems in the third coefficient set obtained by using the method shown in this embodiment are -0.0015, 0.0181, -0.1304, 0.6310, -0.1792, 0.0019, and -0.0250 (as shown in Table 6). When both the device and the optical-electro conversion module compensate for the electrical signal, the TDECQ index obtained by the optical eye pattern analyzer through simulation is 1.05. The IEEE 802.3 specification requires the TDECQ to be less than 3.4. Therefore, according to the method shown in this embodiment, the TDECQ index of the optical signal meets the requirement of the IEEE 802.3 specification. In the existing solution, only the device compensates for the electrical signal transmitted over the second transmit link, and the optical-electro conversion module performs only electro-optical conversion on the electrical signal from the device to output an optical signal. The TDECQ index obtained by the optical eye pattern analyzer by simulating the optical signal output by the optical-electro conversion module in the existing solution is 3.7. It may be learned that in the existing solution, the TDECQ index of the optical signal output by the optical-electro conversion module does not meet the requirement of the IEEE 802.3 specification. It may be understood that compared with the existing solution, the method shown in this embodiment effectively improves the TDECQ index, that is, effectively improves the signal quality of the optical signal output by the optical-electro conversion module shown in this embodiment.

The method shown in this embodiment can effectively improve signal quality of an optical signal emitted by a communication system (for example, the first communication system shown in FIG. 1). Therefore, a second communication system serving as a receiving side receives the optical signal from the first communication system, thereby effectively avoiding a case in which a severe bit error occurs in the second communication system or a service carried by the optical signal is interrupted due to signal quality degradation of the optical signal.

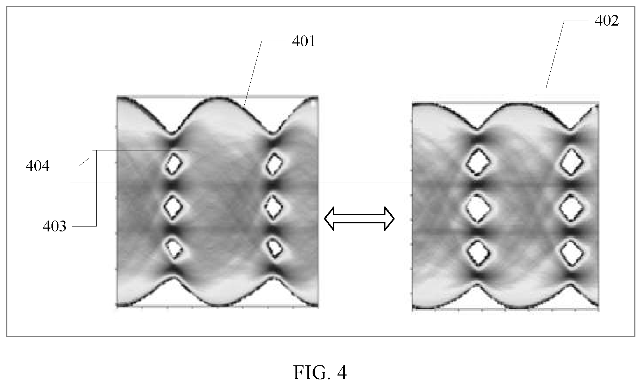

FIG. 4 is an example diagram of comparison between an eye pattern of an optical signal emitted by an optical-electro conversion module according to this application and an eye pattern of an optical signal emitted by an optical-electro conversion module according to an existing solution. The optical eye pattern analyzer receives the optical signal output by the optical-electro conversion module shown by using the existing solution, to obtain a first eye pattern 401. For the first eye pattern 401, a horizontal axis is time, and a vertical axis is a voltage amplitude. The optical eye pattern analyzer receives the optical signal for which the solution shown in this embodiment is used, to obtain a second eye pattern 402. The first eye pattern 401 has a first eye opening (Eye opening) 403, and the second eye pattern 402 has a second eye opening 404. It may be learned from FIG. 4 that the first eye opening 403 is less than the second eye opening 404. An opening of an eye pattern reflects noise on a signal. That is, the "eye" opening of the eye pattern reflects strength of ISI. A larger "eye" opening and a more symmetric eye pattern indicate lower ISI. Otherwise, it indicates higher ISI. It may be learned from comparison between the first eye pattern 401 and the second eye pattern 402 that in the method shown in this embodiment, compared with the existing optical-electro conversion module, the eye opening of the eye pattern is effectively improved, and the eye pattern has a more symmetric form, thereby effectively reducing the ISI, and improving the signal quality of the optical signal emitted by the optical-electro conversion module.

In the embodiment shown in FIG. 3, it is expected that an amplitude-frequency response curve (a horizontal coordinate is a frequency, and a vertical coordinate is an amplitude) of the optical signal emitted by the optical-electro conversion module is a flat straight line, that is, amplitudes of the output optical signal at frequencies are the same or approximately the same. However, considering impact of factors such as dispersion, multipath interference (multipath interference, MPI), or nonlinearity in a process of transmitting, through the optical fiber, the optical signal emitted by the optical-electro conversion module, to enable the optical signal to have good quality in the optical-electro conversion module on the receiving side, for example, have a low bit error rate, the device may obtain a corresponding insertion loss (that is, a third link parameter) based on a feature of the optical-electro conversion module and/or a link feature of the optical fiber, and obtain a plurality of tap coefficients corresponding to the third link parameter. The device convolves the third coefficient set and the plurality of tap coefficients corresponding to the third link parameter to obtain a plurality of target tap coefficients. The device compensates for the first electrical signal based on the target tap coefficients, to obtain the second electrical signal. In this example, the amplitude-frequency response curve of the optical signal output by the optical-electro conversion module is not a flat straight line, and the amplitude-frequency response curve is in a nonlinear state. This can compensate for dispersion, MPI, nonlinearity, and the like in the process of transmitting the optical signal through the optical fiber, thereby improving quality of the optical signal received by the optical-electro conversion module on the receiving side.

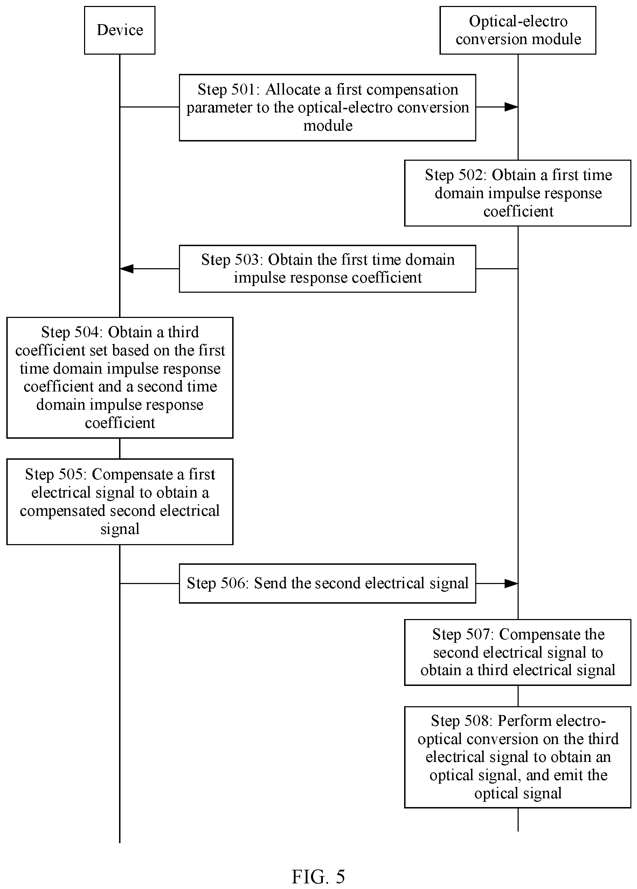

In the example shown in FIG. 3, the first coefficient set includes N tap coefficients, the second coefficient set includes P tap coefficients, and the device obtains, based on the first coefficient set and the second coefficient set, P tap coefficients used for compensation. In an embodiment shown in FIG. 5, a manner in which the device obtains the tap coefficient used to compensate for the electrical signal is different from that in the embodiment shown in FIG. 3. FIG. 5 is a flowchart of steps of a second embodiment of a signal transmission method according to this application.

Step 501: A device allocates a first compensation parameter to an optical-electro conversion module.

For an execution process of step 501 shown in this embodiment, refer to corresponding step 301 in FIG. 3. Details are not described.

Step 502: The optical-electro conversion module obtains a first time domain impulse response coefficient.

After receiving the first compensation parameter, the optical-electro conversion module shown in this embodiment obtains a first coefficient set corresponding to the first compensation parameter. The first coefficient set shown in this embodiment includes the first time domain impulse response coefficient. Specifically, the optical-electro conversion module pre-creates a correspondence between different first compensation parameters and different first coefficient sets. Therefore, after receiving the first compensation parameter from the device, the optical-electro conversion module may obtain the corresponding first coefficient set. The following describes the first time domain impulse response coefficient included in the first coefficient set.

The optical-electro conversion module first obtains corresponding frequency domain parameters when electrical signals at different frequencies are transmitted over a first transmit link. The frequency domain parameter includes an amplitude-frequency response parameter and a phase-frequency response parameter. The frequency domain parameter may be obtained through simulation or testing based on hardware of the first transmit link (for example, a board material of a PCB included in the first transmit link, a trace structure, a width, and a thickness of a high-speed signal line included in the first transmit link, and the like). Specifically, for example, the optical-electro conversion module stores frequency domain parameters corresponding to more than 100 frequencies. When the optical-electro conversion module obtains the first compensation parameter, the optical-electro conversion module obtains a frequency domain parameter corresponding to the first compensation parameter, and performs inverse Fourier transform on the frequency domain parameter corresponding to the first compensation parameter to obtain the first time domain impulse response coefficient. Optionally, the optical-electro conversion module shown in this embodiment may alternatively directly store a correspondence between the first compensation parameter and the first time domain impulse response coefficient. In this case, when obtaining the first compensation parameter, the optical-electro conversion module directly obtains the first time domain impulse response coefficient corresponding to the first compensation parameter. Step 503: The device obtains the first time domain impulse response coefficient from the optical-electro conversion module.

The optical-electro conversion module writes the first time domain impulse response coefficient into a register. The device reads the first time domain impulse response coefficient from a register of a control chip through a communication bus.

Step 504: The device obtains a third coefficient set based on the first time domain impulse response coefficient and a second time domain impulse response coefficient.

The device obtains the second time domain impulse response coefficient. The second time domain impulse response coefficient shown in this embodiment is obtained through simulation or testing based on hardware of a second transmit link (for example, a board material of a PCB included in the second transmit link, a trace structure, a width, and a thickness of a high-speed signal line included in the second transmit link, and the like). For example, the device may obtain a frequency domain parameter of the second transmit link. For descriptions of the frequency domain parameter of the second transmit link, refer to the descriptions of the frequency domain parameter of the first transmit link. Details are not described. Then, the device performs inverse Fourier transform on the frequency domain parameter of the second transmit link to obtain the second time domain impulse response coefficient. For another example, a register of the device directly stores the second time domain impulse response coefficient. When performing this step, the device directly reads the second time domain impulse response coefficient from the register.

When the device obtains the first time domain impulse response coefficient and the second time domain impulse response coefficient, the device convolves the first time domain impulse response coefficient and the second time domain impulse response coefficient, and finds an inverse solution of the first time domain impulse response coefficient and the second time domain impulse response coefficient to obtain a fourth coefficient set. The fourth coefficient set may include a plurality of tap coefficients. The device may further perform length truncation processing on the fourth coefficient set to obtain the third coefficient set, so that the third coefficient set includes P tap coefficients in the fourth coefficient set. A truncation principle is as follows: 1. If P tap coefficients are required for compensating for the second transmit link, the P tap coefficients are selected from the fourth coefficient set, and the P tap coefficients are consecutive coefficients in the fourth coefficient set. 2. A tap coefficient at a central position in the P tap coefficients is a largest value in the fourth coefficient set.

Step 505: The device compensates for a first electrical signal to obtain a compensated second electrical signal.

Step 506: The device sends the second electrical signal to the optical-electro conversion module.

Step 507: The optical-electro conversion module compensates for the second electrical signal to obtain a compensated third electrical signal.

Step 508: The optical-electro conversion module performs electro-optical conversion on the third electrical signal to obtain an optical signal, and emits the optical signal.

For an execution process of step 505 to step 508 shown in this embodiment, refer to corresponding step 306 to step 309 in FIG. 3. Details are not described.

According to the method shown in this embodiment, the device can perform computation based on the second time domain impulse response coefficient stored in the device and the first time domain impulse response coefficient from the optical-electro conversion module, to obtain the third coefficient set. The device compensates for the first electrical signal based on the third coefficient set, to obtain the second electrical signal, thereby effectively reducing ISI of the electrical signal transmitted over the transmit link, and improving signal quality.

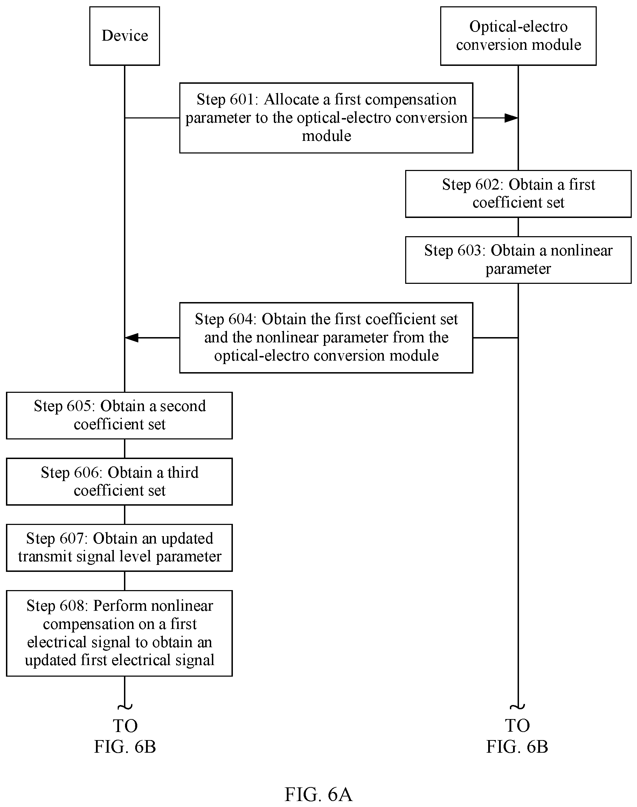

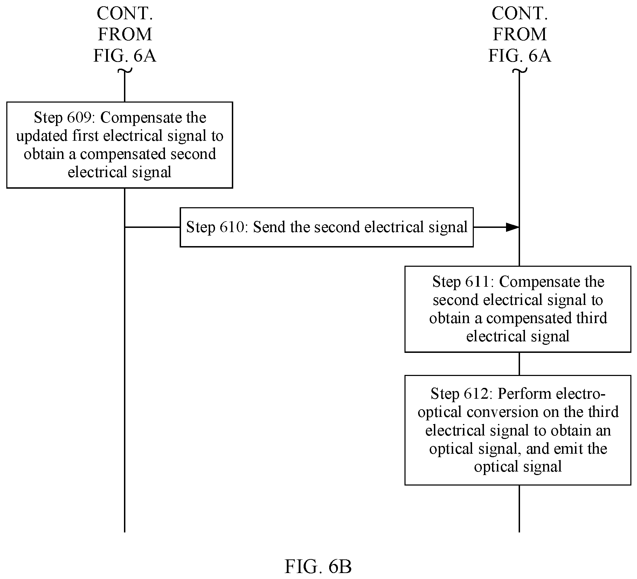

In the embodiment corresponding to FIG. 3, an example in which the optical-electro conversion module returns only the first coefficient set to the device based on the first compensation parameter is used. In an embodiment shown in FIG. 6A and FIG. 6B, the optical-electro conversion module can return the first coefficient set and a parameter used to compensate for a nonlinear feature of the transmit link to the device based on the first compensation parameter. FIG. 6A and FIG. 6B are a flowchart of steps of a third embodiment of a signal transmission method according to this application.

Step 601: A device allocates a first compensation parameter to an optical-electro conversion module.

Step 602: The optical-electro conversion module obtains a first coefficient set.

For a specific execution process of step 601 and step 602 shown in this embodiment, refer to step 301 and step 302 shown in FIG. 3. Details are not described.

Step 603: The optical-electro conversion module obtains a nonlinear parameter.

In this embodiment, when obtaining the first compensation parameter, the optical-electro conversion module can obtain the nonlinear parameter corresponding to the first compensation parameter. The nonlinear parameter is related to a nonlinear feature of the transmit link. The nonlinear feature increases ISI of an electrical signal transmitted over the transmit link, and the nonlinear feature may be introduced in a process in which an electro-optical conversion chip of the electro-optical conversion module performs electro-optical conversion. Specifically, the nonlinear parameter may be a level shift (Level _shift) parameter, a pattern-dependent lookup table (pattern-dependent lookup table, PD_LUT) parameter, or the like. In this embodiment, an example in which the nonlinear parameter may be a Level_shift parameter is used. It should be noted that a type of the nonlinear parameter is not limited in this embodiment. For details, refer to Table 8.

**Table 8**

| CTLE level of the optical-electro conversion module | Coefficient set | Level_shift parameter |
|---|---|---|
| 0 | [xxx, xxx, ..., xxx, xxx] | [xxx, xxx] |
| 1 | [xxx, xxx, ..., xxx, xxx] | [xxx, xxx] |
| 2 | [xxx, xxx, ..., xxx, xxx] | [xxx, xxx] |
| 3 | [xxx, xxx, ..., xxx, xxx] | [xxx, xxx] |
| 4 | [xxx, xxx, ..., xxx, xxx] | [xxx, xxx] |
| 5 | [xxx, xxx, ..., xxx, xxx] | [xxx, xxx] |
| 6 | [xxx, xxx, ..., xxx, xxx] | [xxx, xxx] |
| 7 | [0.0019, 0.0095, 0.086, 0.6841, 0.1665, 0.0382, 0.0138] | [0.1, -0.1] |
| 8 | [xxx, xxx, ..., xxx, xxx] | [xxx, xxx] |
| 9 | [xxx, xxx, ..., xxx, xxx] | [xxx, xxx] |
| 10 | [xxx, xxx, ..., xxx, xxx] | [xxx, xxx] |

It may be understood that the optical-electro conversion module creates a correspondence between the CTLE level of the optical-electro conversion module, the coefficient set, and the Level_shift parameter based on the list shown in Table 8. For example, if a CTLE level of the optical-electro conversion module that corresponds to the first compensation parameter and that is obtained by the optical-electro conversion module is 7, obtained Level_shift parameters corresponding to the CTLE level 7 are 0.1 and -0.1. For descriptions of the coefficient set shown in this embodiment, refer to the embodiment corresponding to FIG. 3 or FIG. 5. Details are not described.

Step 604: The device obtains the first coefficient set and the nonlinear parameter from the optical-electro conversion module.

After obtaining the first coefficient set and the nonlinear parameter, the optical-electro conversion module writes the first coefficient set and the nonlinear parameter into a register of the optical-electro conversion module. The device reads the first coefficient set and the nonlinear parameter from the register of the optical-electro conversion module through a communication bus.

Step 605: The device obtains a second coefficient set.

Step 606: The device obtains a third coefficient set based on the first coefficient set and the second coefficient set. For an execution process of step 605 and step 606 shown in this embodiment, refer to corresponding step 304 and step 305 in FIG. 3. A specific execution process is not described.

Step 607: The device obtains an updated transmit signal level parameter.

After obtaining the Level_shift parameter from the optical-electro conversion module, the device may update a stored original transmit signal level parameter to obtain the updated transmit signal level parameter. For details, refer to Table 9.

**Table 9**

| Original transmit signal level parameter | Updated transmit signal level parameter |
|---|---|
| +3 | +3 |
| +1 | 0.9 |
| -1 | -0.9 |
| -3 | -3 |

As shown in this embodiment, an example in which a pattern of a first electrical signal emitted by the device is PAM4 is used. It may be learned from the original transmit signal level parameter that a level of the first electrical signal may be +3, +1, -1, and -3. After receiving the Level_shift parameter, the device separately updates the level of the first electrical signal to +3, 0.9, -0.9, and -3 based on the Level_shift parameter. Then, the device updates the level of the first electrical signal from +3, +1, -1, and -3 to +3, 0.9, -0.9, and -3.

Step 608: The device performs nonlinear compensation on the first electrical signal based on the updated transmit signal level parameter, to obtain an updated first electrical signal.

The device shown in this embodiment performs nonlinear compensation on the level of the first electrical signal based on the updated transmit signal level parameter, to obtain the updated first electrical signal. For example, the level +1 of the first electrical signal is updated to the level 0.9 of the updated first electrical signal. For details, refer to Table 9. Details are not described.

Step 609: The device compensates for the updated first electrical signal to obtain a compensated second electrical signal.

For an execution process of step 609 shown in this embodiment, refer to corresponding step 306 in FIG. 3. Details are not described.

In this embodiment, an example in which the device first performs nonlinear compensation on the first electrical signal based on Table 9, to obtain the updated first electrical signal, and then compensates for the updated first electrical signal based on an FFE of the device, to obtain the compensated second electrical signal is used. In another example, the device may alternatively first compensate for the first electrical signal based on an FFE, to obtain a second electrical signal, and then perform nonlinear compensation on the second electrical signal based on Table 9, to obtain an updated second electrical signal.

Step 610: The device sends the second electrical signal to the optical-electro conversion module.

Step 611: The optical-electro conversion module compensates for the second electrical signal to obtain a compensated third electrical signal.

Step 612: The optical-electro conversion module performs electro-optical conversion on the third electrical signal to obtain an optical signal, and emits the optical signal.

For descriptions of an execution process of step 610 to step 612 shown in this embodiment, refer to corresponding step 307 to step 309 in FIG. 3. Details are not described.

A plurality of optical-electro conversion modules may be inserted into the device shown in this embodiment. Each optical-electro conversion module may include a plurality of TX channels. For a process of performing signal transmission between each TX channel of each optical-electro conversion module and the device, refer to FIG. 6A and FIG. 6B. Details are not described.

According to the method shown in this embodiment, the device can perform, based on the nonlinear parameter from the optical-electro conversion module, nonlinear compensation on an electrical signal transmitted over a second transmit link, thereby effectively suppressing ISI of the transmit link, and improving signal quality of the optical signal emitted by the optical-electro conversion module.

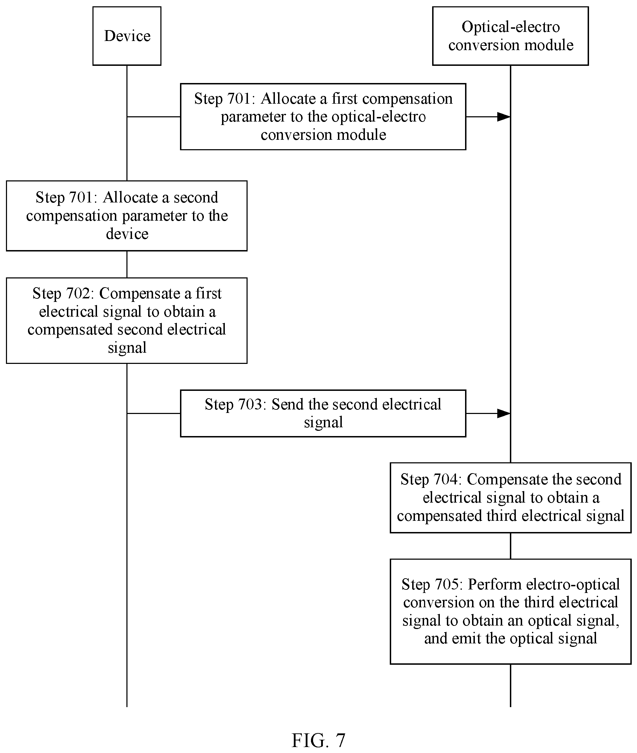

In the embodiments shown in FIG. 3, FIG. 6A, and FIG. 6B, to implement distributed compensation for the transmit link by the device and the optical-electro conversion module, the optical-electro conversion module needs to store a large amount of data shown in Table 3 or Table 4, occupying a large quantity of space resources of the register of the optical-electro conversion module. In an embodiment shown in FIG. 7, when the device and the optical-electro conversion module perform distributed compensation for the transmit link, the occupied space resources of the register of the optical-electro conversion module are effectively reduced, and a time consumed for the device and the optical-electro conversion module to perform the signal transmission method is reduced. FIG. 7 is a flowchart of steps of a fourth embodiment of a signal transmission method according to this application.

Step 701: A device allocates a first compensation parameter to an optical-electro conversion module, and allocates a second compensation parameter to the device.

The device shown in this embodiment not only needs to allocate the first compensation parameter to the optical-electro conversion module, but also needs to allocate the second compensation parameter to the device. A specific allocation example is as follows:

### Allocation example 1

First, the device obtains a link parameter. For descriptions of obtaining the link parameter by the device shown in this embodiment, refer to corresponding step 301 in FIG. 3. Details are not described.

Then, the device obtains the first compensation parameter and the second compensation parameter based on the link parameter.

After obtaining the link parameter, the device obtains the first compensation parameter and the second compensation parameter based on a preset allocation rate. For an allocation process, refer to Table 10.

**Table 10**

| Allocation rate corresponding to the first compensation parameter | Allocation rate corresponding to the second compensation parameter |
|---|---|
| Q1 | Q2 |

Based on Table 10, the device obtains the first compensation parameter=link parameter*Q1 and the second compensation parameter=link parameter*Q2, where Q1+Q2=1. Specific values of Q1 and Q2 are not limited in this embodiment. For example, values of both Q1 and Q2 are 50%. For another example, a value of Q1 is 40%, and a value of Q2 is 60%. In this embodiment, an example in which the values of both Q1 and Q2 are 50% is used for description. For example, if the first compensation parameter obtained by the device is 14 decibels (dB), the device determines that both the first compensation parameter and the second compensation parameter are 7 dB. The device sends the first compensation parameter to the optical-electro conversion module. It may be understood that both the first compensation parameter and the second compensation parameter shown in this embodiment are less than the link parameter.

### Allocation example 2

In this allocation example, a link parameter is allocated as the first compensation parameter and the second compensation parameter by using an allocation algorithm. For descriptions of obtaining the link parameter by the device shown in this example, refer to the allocation example 1. Details are not described.

First, the optical-electro conversion module obtains parameters shown in Table 2. Specifically, the optical-electro conversion module obtains the first compensation parameter X based on a first allocation algorithm, where X is closest to C*B/(A+B). The optical-electro conversion module obtains the second compensation parameter Y based on a second allocation algorithm, where Y=C-X. The descriptions of the allocation algorithm in this example are an optional example, and are not limited.

In this embodiment, the device can compensate, based on the second compensation parameter, an electrical signal transmitted over a second transmit link. Specifically, the device amplifies a high-frequency signal and attenuates a low-frequency signal in the electrical signal transmitted over the second transmit link, based on the second compensation parameter, to suppress ISI of the electrical signal transmitted over the second transmit link.

It should be noted that after obtaining the first compensation parameter, the device sends the first compensation parameter to the optical-electro conversion module. After obtaining the second compensation parameter, the device stores the second compensation parameter in a register of a processing chip. A time sequence in which the device sends the first compensation parameter to the optical-electro conversion module and stores the second compensation parameter in the register of the processing chip is not limited in this embodiment.

Step 702: The device compensates for a first electrical signal to obtain a compensated second electrical signal.

In this embodiment, the device creates a correspondence between different second compensation parameters and second coefficient sets. In this embodiment, an example in which the second coefficient set includes N tap coefficients is used. For descriptions of the second coefficient set including the N tap coefficients, refer to the embodiment corresponding to FIG. 3. Details are not described. The device shown in this embodiment may store a correspondence shown in Table 11.

**Table 11**

| Second compensation parameter | Second coefficient set |
|---|---|
| ... | ... |
| 7 | [0.0019, 0.0095, -0.086, 0.6841, 0.1665, 0.0382, 0.0138] |
| ... | ... |
| 14 | [-0.0018, 0.0044, -0.051, 0.5738, -0.3221, 0.0407,-0.0284] |
| ... | ... |

When the second compensation parameter obtained by the device is 7 dB, it may be obtained that the tap coefficients included in the corresponding second coefficient set are 0.0019, 0.0095, -0.086, 0.6841, 0.1665, 0.0382, and 0.0138. In this case, an FFE of the device compensates for the first electrical signal based on the second coefficient set corresponding to the second compensation parameter, to obtain the second electrical signal. For a specific process in which the device compensates for the first electrical signal based on the second coefficient set corresponding to the second compensation parameter, to obtain the second electrical signal, refer to the process that is shown in corresponding step 306 in FIG. 3 and in which the device compensates for the first electrical signal based on the third coefficient set, to obtain the second signal. Details are not described.

Step 703: The device sends the second electrical signal to the optical-electro conversion module.

For an execution process of step 703 shown in this embodiment, refer to corresponding step 307 in FIG. 3. Details are not described.

Step 704: The optical-electro conversion module compensates for the second electrical signal to obtain a compensated third electrical signal.

The optical-electro conversion module shown in this embodiment configures a level of a CTLE based on the first compensation parameter. In this case, the CTLE for which the CTLE level is configured can compensate for the second electrical signal to obtain the third electrical signal. For descriptions of performing compensation by the CTLE based on the level, refer to step 302 and step 308. Details are not described.

Step 705: The optical-electro conversion module performs electro-optical conversion on the third electrical signal to obtain an optical signal, and emits the optical signal.

For an execution process of step 705 shown in this embodiment, refer to corresponding step 309 in FIG. 3. Details are not described.

A plurality of optical-electro conversion modules may be inserted into the device shown in this embodiment. Each optical-electro conversion module may include a plurality of TX channels. For a process of performing signal transmission between each TX channel of each optical-electro conversion module and the device, refer to FIG. 7. Details are not described.

According to the method shown in this embodiment, distributed compensation performed by the device and the optical-electro conversion module for the transmit link can be implemented, thereby effectively improving signal quality of the optical signal output by the optical-electro conversion module, and effectively suppressing ISI. In addition, in a compensation process, the optical-electro conversion module does not need to store an excessively large amount of data, thereby reducing occupied space resources of a register of the optical-electro conversion module. The optical-electro conversion module directly compensates for the second electrical signal based on the first compensation parameter from the device, and the device directly compensates for the first electrical signal based on the second compensation parameter, thereby reducing a time consumed for the device and the optical-electro conversion module to perform the signal transmission method.

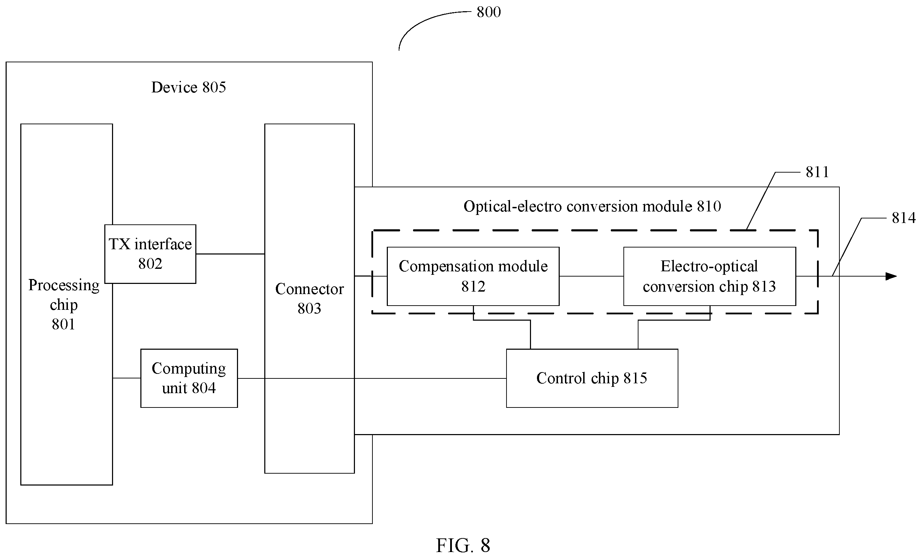

In the foregoing embodiments, an example in which the device is responsible for allocating the first compensation parameter is used. In the following embodiments, the optical-electro conversion module is responsible for allocating the first compensation parameter. FIG. 8 is an example diagram of a structure of a second embodiment of a communication system according to this application. The communication system 800 shown in this embodiment includes a device 805 and one or more optical-electro conversion modules 810. A processing chip 801, a computing unit 804, and a connector 803 are packaged in the device 805. For descriptions of the processing chip 801 and the connector 803, refer to the corresponding descriptions in FIG. 2. Details are not described. The computing unit 804 is connected to the processing chip 801. For descriptions of a type of the computing unit 804 shown in this embodiment, refer to descriptions of a type of the processing chip 801. Details are not described. Optionally, the processing chip 801 may be integrated with the computing unit 804. The optical-electro conversion module 810 includes a TX channel 811. The transmit channel 811 includes a compensation module 812, an electro-optical conversion chip 813, and an output optical fiber 814 that are sequentially connected. For descriptions of the TX channel 811, refer to the corresponding descriptions in FIG. 2. Details are not described. The optical-electro conversion module 810 further includes a control chip 815 that is separately connected to the compensation module 812, the electro-optical conversion chip 813, and the computing unit 804. Optionally, the control chip 815 may be integrated with the compensation module 812. For descriptions of a type of the control chip 815, refer to the descriptions of the type of the processing chip 801. Details are not described.

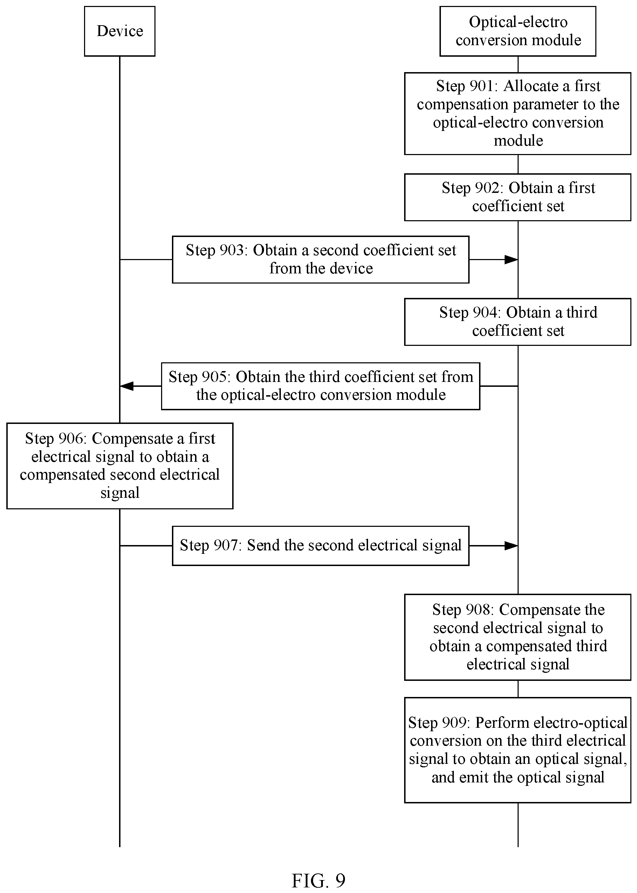

It may be understood that the optical-electro conversion module shown in this embodiment includes the control chip 815, and the optical-electro conversion module allocates a first compensation parameter based on the control chip 815. For a specific execution process, refer to FIG. 9. FIG. 9 is a flowchart of steps of a fifth embodiment of a signal transmission method according to this application.

Step 901: An optical-electro conversion module allocates a first compensation parameter to the optical-electro conversion module.

After the optical-electro conversion module is inserted into a connector of a device and powered on, a control chip of the optical-electro conversion module may obtain a link parameter, and allocate the first compensation parameter based on the link parameter. For descriptions of the link parameter, refer to corresponding step 301 in FIG. 3. Details are not described. For example, a computing unit of the device reads a second link parameter from a register of the processing chip, and sends the second link parameter to the control chip of the optical-electro conversion module through a communication bus. The control chip obtains a first link parameter stored in the register. The control chip may obtain the link parameter based on the first link parameter and the second link parameter. For descriptions of allocating the first compensation parameter by the control chip of the optical-electro conversion module based on the link parameter, refer to the descriptions of allocating the first compensation parameter by the device shown in corresponding step 301 in FIG. 3. Details are not described.

Step 902: The optical-electro conversion module obtains a first coefficient set.

For an execution process of step 902 shown in this embodiment, refer to corresponding step 302 in FIG. 3. Details are not described.

Step 903: The optical-electro conversion module obtains a second coefficient set from the device.

For descriptions of the second coefficient set shown in this embodiment, refer to corresponding step 304 in FIG. 3. Details are not described. In this embodiment, the computing unit reads the second coefficient set from the register of the processing chip, and sends the second coefficient set to the control chip of the optical-electro conversion module through the communication bus.

Step 904: The optical-electro conversion module obtains a third coefficient set based on the first coefficient set and the second coefficient set.

When the optical-electro conversion module obtains the first coefficient set and the second coefficient set, the optical-electro conversion module convolves the first coefficient set and the second coefficient set to obtain the third coefficient set. For descriptions of obtaining the third coefficient set by the optical-electro conversion module shown in this embodiment, refer to the descriptions of obtaining the third coefficient set by the device shown in corresponding step 305 in FIG. 3. Details are not described.

Step 905: The device obtains the third coefficient set from the optical-electro conversion module.

The control chip of the optical-electro conversion module stores the third coefficient set in the register, and sends the third coefficient set to the computing unit through the communication bus. The processing chip of the device reads the third coefficient set from the computing unit.

The device shown in this embodiment may further obtain a nonlinear parameter from the optical-electro conversion module. For descriptions of the nonlinear parameter and descriptions of performing nonlinear compensation by the device based on the nonlinear parameter, refer to the corresponding descriptions in FIG. 6A and FIG. 6B. Details are not described.

In this embodiment, an example in which the first coefficient set includes N tap coefficients, and the second coefficient set includes P tap coefficients is used. In this case, the first coefficient set and the second coefficient set are convolved to obtain the third coefficient set. The third coefficient set includes P tap coefficients. For a specific process, refer to the corresponding descriptions in FIG. 3. Details are not described. Optionally, the first coefficient set includes a first time domain impulse response coefficient, and the second coefficient set includes a second time domain impulse response coefficient. For descriptions of convolving the first time domain impulse response coefficient and the second time domain impulse response coefficient by the optical-electro conversion module to obtain the third coefficient set, refer to the descriptions of the process in which the device shown in FIG. 5 obtains the corresponding third coefficient set based on the first time domain impulse response coefficient and the second time domain impulse response coefficient. Details are not described.

Step 906: The device compensates for a first electrical signal to obtain a compensated second electrical signal.

Step 907: The device sends the second electrical signal to the optical-electro conversion module.

Step 908: The optical-electro conversion module compensates for the second electrical signal to obtain a compensated third electrical signal.

Step 909: The optical-electro conversion module performs electro-optical conversion on the third electrical signal to obtain an optical signal, and emits the optical signal.

For descriptions of an execution process of step 906 to step 909 shown in this embodiment, refer to corresponding step 306 to step 309 in FIG. 3. Details are not described.

A plurality of optical-electro conversion modules may be inserted into the device shown in this embodiment. Each optical-electro conversion module may include a plurality of TX channels. For a process of performing signal transmission between each TX channel of each optical-electro conversion module and the device, refer to FIG. 9. Details are not described.

According to the method shown in this embodiment, to compensate for an electrical signal transmitted over a transmit link (including a first transmit link and a second transmit link), the optical-electro conversion module obtains the link parameter required for compensating for the electrical signal transmitted over the transmit link, and allocates the first compensation parameter to the optical-electro conversion module in a distributed compensation manner. Based on the distributed compensation manner, the device and the optical-electro conversion module jointly compensate for the electrical signal transmitted over the transmit link. In addition, the optical-electro conversion module obtains the second coefficient set from the device, and convolves the first coefficient set and the second coefficient set to obtain the third coefficient set. Then, the optical-electro conversion module sends the coefficient set to the device, and an FFE of the device performs compensation by using the third coefficient set, thereby effectively reducing ISI of the electrical signal transmitted over the transmit link, and improving signal quality.

For example, X optical-electro conversion modules are inserted into the device. In this example, a value of X is 128. If the device is responsible for allocating the first compensation parameter to the 128 optical-electro conversion modules, the device needs to perform serial computing for the 128 optical-electro conversion modules, to allocate the first compensation parameter. For example, the device performs computation for a first optical-electro conversion module in the 128 optical-electro conversion modules, to allocate the first compensation parameter to the first optical-electro conversion module, and the device and the first optical-electro conversion module jointly compensate for the electrical signal transmitted over the transmit link. Then, the device performs computation for a second optical-electro conversion module in the 128 optical-electro conversion modules, to allocate the first compensation parameter to the second optical-electro conversion module, and the device and the second optical-electro conversion module jointly compensate for the electrical signal transmitted over the transmit link, and so on, until the device performs computation for a last optical-electro conversion module in the 128 optical-electro conversion modules, to allocate the first compensation parameter to the last optical-electro conversion module. It may be understood that the device performs serial computing for the 128 optical-electro conversion modules. This greatly reduces computational efficiency of allocating the first compensation parameter to the device and the 128 optical-electro conversion modules, and increases a time required for the 128 optical-electro conversion modules to emit an optical signal.

However, according to the method shown in this embodiment, each of the 128 optical-electro conversion modules independently allocates the first compensation parameter for computation. In this way, the serial computing performed by the device for the 128 optical-electro conversion modules shown in the foregoing example is changed to parallel computing of the 128 optical-electro conversion modules shown in this embodiment. Therefore, the method shown in this embodiment greatly improves computational efficiency of allocating the first compensation parameter, and reduces a time required for the 128 optical-electro conversion modules to emit an optical signal.

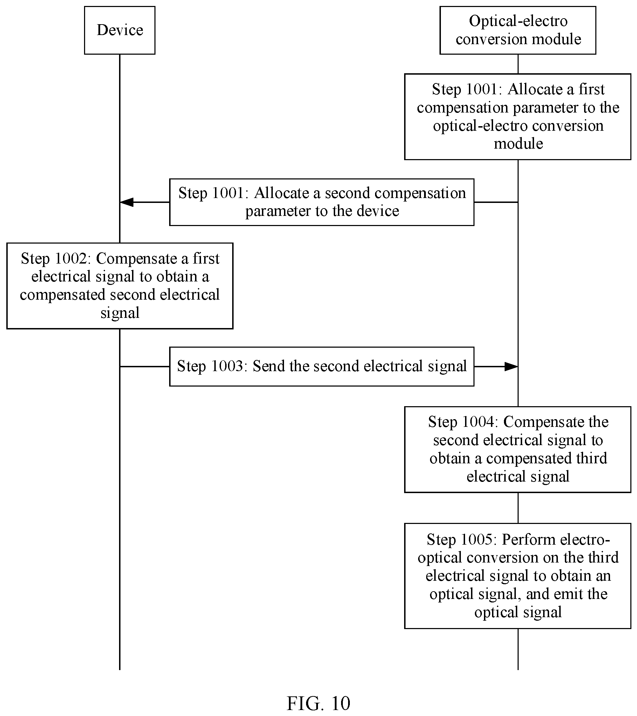

In the embodiment shown in FIG. 9, to implement joint compensation for the transmit link by the device and the optical-electro conversion module, the optical-electro conversion module needs to store a large amount of data shown in Table 3 or Table 4, occupying a large quantity of space resources of a register of the optical-electro conversion module. In an embodiment shown in FIG. 10, when the device and the optical-electro conversion module jointly compensate for the electrical signal transmitted over the transmit link, the occupied space resources of the register of the optical-electro conversion module are effectively reduced, and a time consumed for the device and the optical-electro conversion module to perform the signal transmission method is reduced. FIG. 10 is a flowchart of steps of a sixth embodiment of a signal transmission method according to this application.

Step 1001: An optical-electro conversion module allocates a first compensation parameter to the optical-electro conversion module, and allocates a second compensation parameter to a device.

For descriptions of an execution process of step 1001 shown in this embodiment, refer to corresponding step 901 in FIG. 9. Details are not described.

Step 1002: The device compensates for a first electrical signal to obtain a compensated second electrical signal.

Step 1003: The device sends the second electrical signal to the optical-electro conversion module.

Step 1004: The optical-electro conversion module compensates for the second electrical signal to obtain a compensated third electrical signal.

Step 1005: The optical-electro conversion module performs electro-optical conversion on the third electrical signal to obtain an optical signal, and emits the optical signal.

For an execution process of step 1002 to step 1005 shown in this embodiment, refer to corresponding step 702 to step 705 in FIG. 7. Details are not described.

A plurality of optical-electro conversion modules may be inserted into the device shown in this embodiment. Each optical-electro conversion module may include a plurality of TX channels. For a process of performing signal transmission between each TX channel of each optical-electro conversion module and the device, refer to FIG. 10. Details are not described.

According to the method shown in this embodiment, distributed compensation performed by the device and the optical-electro conversion module for a transmit link can be implemented, thereby effectively improving signal quality of the optical signal output by the optical-electro conversion module, and effectively suppressing ISI. In addition, in a compensation process, the optical-electro conversion module does not need to store an excessively large amount of data, thereby reducing occupied space resources of a register of the optical-electro conversion module. In addition, the optical-electro conversion module directly compensates for the second electrical signal based on the first compensation parameter from the device, and the device directly compensates for the first electrical signal based on the second compensation parameter, thereby reducing a time consumed for the device and the optical-electro conversion module to perform the signal transmission method. In the method shown in this embodiment, the optical-electro conversion module allocates the first compensation parameter and the second compensation parameter, thereby improving computational efficiency of allocating the first compensation parameter and the second compensation parameter, and reducing a time required for the optical-electro conversion module included in a communication system to emit an optical signal.

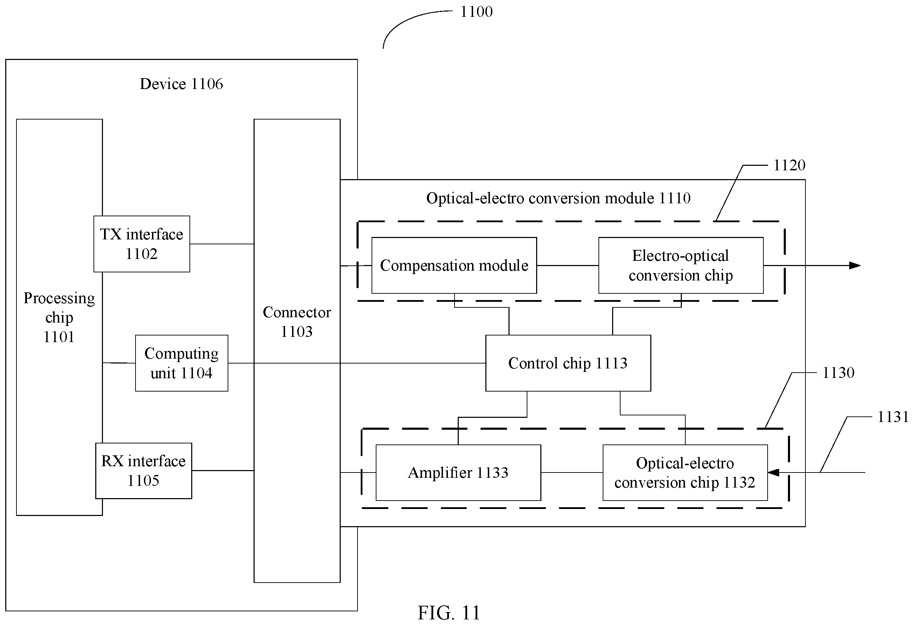

The following describes a structure of the optical-electro conversion module provided in embodiments of this application. The optical-electro conversion module may be a single-channel transmit module. Specifically, as shown in FIG. 2 or FIG. 8, the optical-electro conversion module includes only a TX channel. FIG. 11 is an example diagram of a structure of a third embodiment of a communication system according to this application. The communication system shown in FIG. 11 includes a device 1106 and an optical-electro conversion module 1100. For descriptions of a processing chip 1101, a TX interface 1102, a computing unit 1104, and a connector 1103 included in the device 1106, refer to the corresponding descriptions in FIG. 2 or FIG. 8. Details are not described. The optical-electro conversion module 1110 shown in this embodiment is a dual-channel transceiver module. Specifically, the optical-electro conversion module 1100 includes a TX channel 1120 and a receive (receive, RX) channel 1130. For descriptions of the TX channel 1120, refer to the corresponding descriptions in FIG. 2 or FIG. 8. Details are not described. The RX channel 1130 specifically includes an input optical fiber 1131, an optical-electro conversion chip 1132, and an amplifier 1133. The amplifier 1133 and the optical-electro conversion chip 1132 are connected to a control chip 1113. For descriptions of the control chip 1113, refer to the corresponding descriptions in FIG. 8. Details are not described. The amplifier 1133 is connected to the connector 1103, and the connector 1103 is connected to an RX interface 1105 of the processing chip 1101. The optical-electro conversion chip 1132 is configured to: receive an optical signal from the input optical fiber 1131, and perform optical-electro conversion on the optical signal to obtain an electrical signal. The optical-electro conversion chip 1132 may be a photodiode (positive intrinsic-negative, PIN) or an avalanche diode (avalanche photodiode, APD). The amplifier 1133 is configured to amplify power of an electrical signal from the optical-electro conversion chip 1132 to obtain an amplified electrical signal. The amplifier 1133 may be a trans-impedance amplifier (trans-impedance amplifier, TIA). The amplifier 1133 sends the amplified electrical signal to the RX interface 1105 of the processing chip 1101 through the connector 1103.

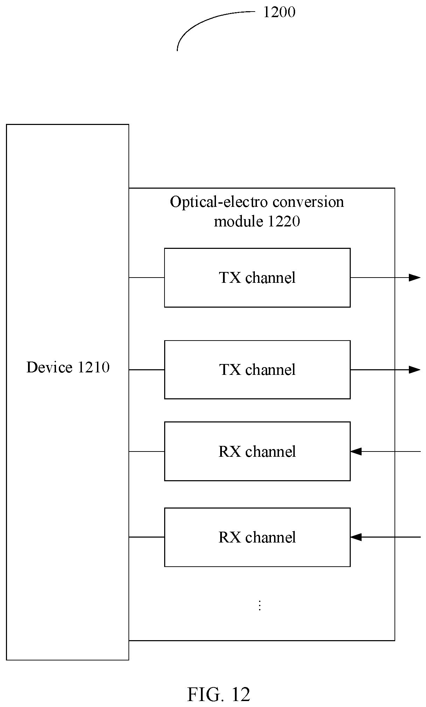

The optical-electro conversion module shown in this embodiment may alternatively be a multi-channel parallel transceiver module. FIG. 12 is an example diagram of a structure of a fourth embodiment of a communication system according to this application. The communication system 1200 shown in this embodiment includes a device 1210 and a plurality of TX channels and a plurality of RX channels that are connected to the device 1210. For descriptions of structures of the TX channel and the RX channel, refer to FIG. 11. Details are not described. A quantity of TX channels and a quantity of RX channels included in an optical-electro conversion module 1220 are not limited in this embodiment.

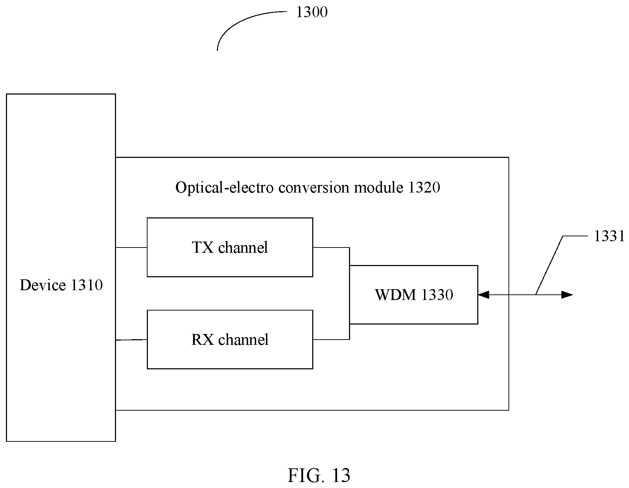

The optical-electro conversion module shown in this embodiment may alternatively be a single-fiber bidirectional module. FIG. 13 is an example diagram of a structure of a fifth embodiment of a communication system according to this application. The communication system 1300 shown in this embodiment includes a device 1310 and an optical-electro conversion module 1320 connected to the device 1310. The optical-electro conversion module 1320 includes a TX channel and an RX channel. For descriptions of structures of the TX channel and the RX channel, refer to FIG. 11. Details are not described. The optical-electro conversion module 1320 shown in this embodiment further includes a wavelength division multiplexer (wavelength division multiplexer, WDM) 1330. The WDM 1330 is configured to couple an optical signal output from the TX channel to an optical cable 1331, and is configured to couple an optical signal from the optical cable 1331 to the RX channel. In this embodiment, quantities of TX channels, RX channels, and WDMs included in the optical-electro conversion module 1320 are not limited, provided that each WDM is connected to at least one TX channel and at least one RX channel.

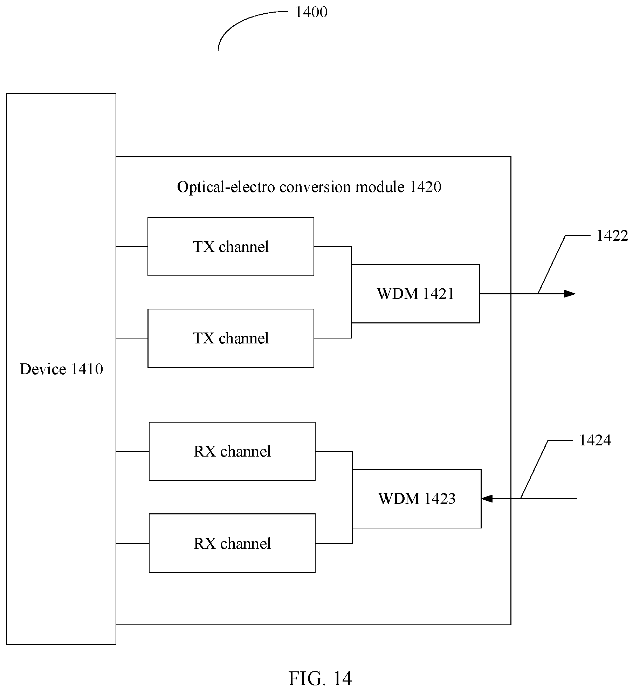

The optical-electro conversion module shown in this embodiment may alternatively be a wavelength division multiplexing transceiver module. FIG. 14 is an example diagram of a structure of a sixth embodiment of a communication system according to this application. The communication system 1400 shown in this embodiment includes a device 1410 and an optical-electro conversion module 1420. The optical-electro conversion module 1420 includes a TX channel and an RX channel. For descriptions of structures of the TX channel and the RX channel, refer to FIG. 11. Details are not described. The optical-electro conversion module 1420 shown in this embodiment further includes a WDM 1421 connected to a plurality of TX channels. The WDM 1421 is configured to: combine a plurality of optical signals output from the plurality of TX channels into one multiplexed optical signal, and couple the multiplexed optical signal to an output optical cable 1422. The optical-electro conversion module 1420 further includes a WDM 1423 connected to a plurality of RX channels. The WDM 1423 is configured to demultiplex a multiplexed optical signal from an input optical cable 1424 into a plurality of optical signals, and the WDM 1423 respectively transmits the plurality of optical signals to the plurality of RX channels. A quantity of TX channels connected to the WDM and a quantity of RX channels connected to the WDM are not limited in this embodiment. The structure of the optical-electro conversion module that performs the foregoing method embodiments may be any one of the examples in FIG. 2, FIG. 8, FIG. 11, FIG. 12, FIG. 13, and FIG. 14, or a combination of at least two of the examples in FIG. 2, FIG. 8, FIG. 11, FIG. 12, FIG. 13, and FIG. 14. This is not specifically limited.

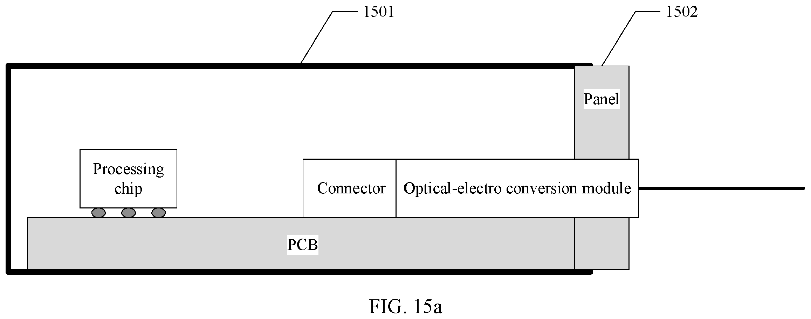

A packaging type of the optical-electro conversion module is not limited in embodiments. For example, FIG. 15a is an example diagram of a first packaging structure of an optical-electro conversion module according to this application. A housing 1501 of a communication system shown in this example has a panel 1502. A device is fastened in the housing 1501. The device specifically includes a PCB, and a processing chip, a connector, and the like that are packaged on the PCB. For descriptions of the device, refer to the descriptions in FIG. 2 or FIG. 8. Details are not described. One or more optical-electro conversion modules are detachably connected to the panel 1502, and the one or more optical-electro conversion modules are electrically connected to the connector. A trace of the PCB is used to electrically connect the connector and the processing chip, to transmit a high-speed electrical signal (for example, the second electrical signal shown in the foregoing method embodiments) between the optical-electro conversion module and the processing chip.

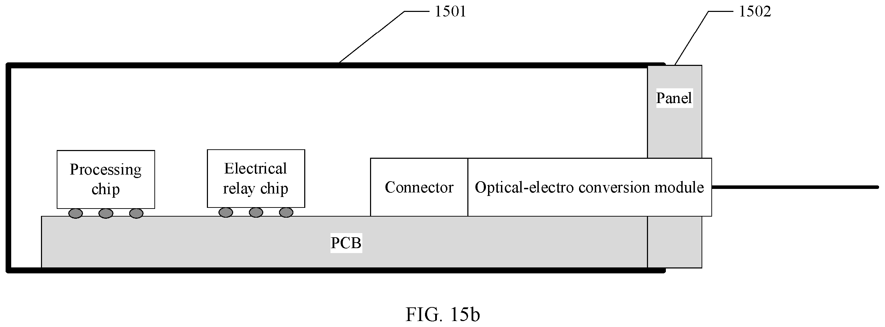

FIG. 15b is an example diagram of a second packaging structure of an optical-electro conversion module according to this application. A housing 1501 of a communication system shown in this example has a panel 1502. A device is fastened in the housing 1501. The device specifically includes a PCB, and a processing chip, a connector, an electrical relay chip, and the like that are packaged on the PCB. For descriptions of the device, refer to the descriptions in FIG. 15a. Details are not described. One or more optical-electro conversion modules are detachably connected to the panel 1502, and the one or more optical-electro conversion modules are electrically connected to the connector. A trace of the PCB is used to sequentially electrically connect the processing chip, the electrical relay chip, and the electrical connection. In this case, a light-speed electrical signal (for example, the second electrical signal shown in the foregoing method embodiments) output by the processing chip is transmitted to the electrical relay chip. The electrical relay chip regenerates and relays the second electrical signal, and then transmits the second electrical signal to the electrical connection through the trace of the PCB. The electrical connection transmits the second electrical signal to the optical-electro conversion module. A second transmit link shown in this example is from an output port of the electrical relay chip to an output port of the connector.

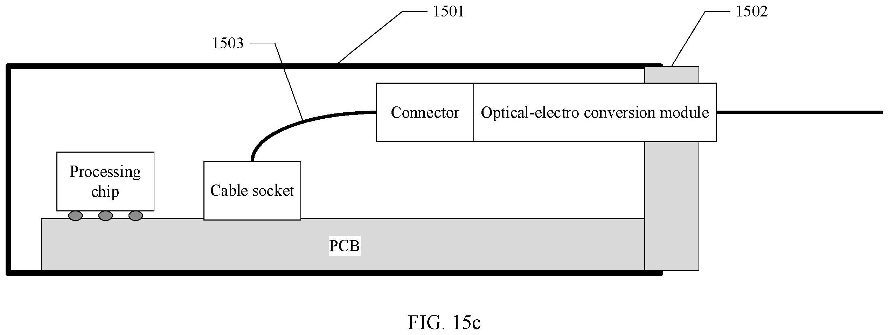

FIG. 15c is an example diagram of a third packaging structure of an optical-electro conversion module according to this application. A housing 1501 of a communication system shown in this example has a panel 1502. A device is fastened in the housing 1501. The device specifically includes a PCB, and a processing chip, a cable socket, and the like that are packaged on the PCB. One or more optical-electro conversion modules are detachably connected to the panel 1502, and the one or more optical-electro conversion modules are electrically connected to a connector. The cable socket packaged on the PCB is configured to electrically connect the processing chip and the connector. In this case, a high-speed electrical signal between the processing chip and the connector is transferred to a low-insertion-loss high-speed cable 1503 through the cable socket for transmission. A packaging form of the optical-electro conversion module shown in this example may be an optical transceiver module (optical transceiver board, OTB).

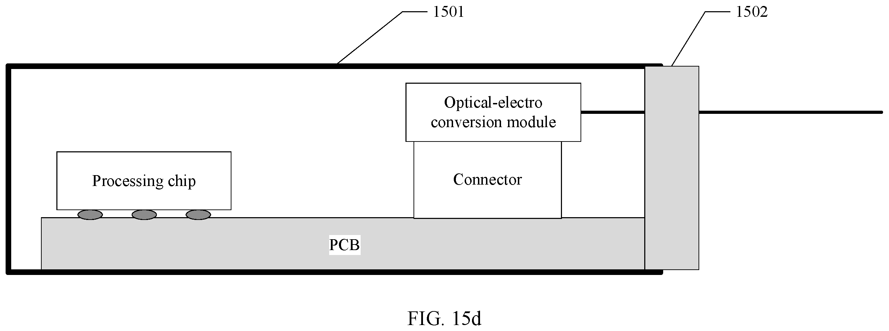

FIG. 15d is an example diagram of a third packaging structure of an optical-electro conversion module according to this application. A housing 1501 of a communication system shown in this example has a panel 1502. A device is fastened in the housing 1501. The device specifically includes a PCB, and a processing chip, a connector, and the like that are packaged on the PCB. The optical-electro conversion module shown in this embodiment is detachably connected within a board, that is, the optical-electro conversion module is fastened to the PCB through the connector, instead of being detachably connected to the panel 1502. An optical fiber connected to the optical-electro conversion module is led out from the panel 1502. In this case, the processing chip transmits a high-speed electrical signal (for example, the second electrical signal shown in the foregoing method embodiments) with the electrical connection through a trace of the PCB. A packaging form of the optical-electro conversion module shown in this example may be a near-packaged optical module (near-packaged optics, NPO).

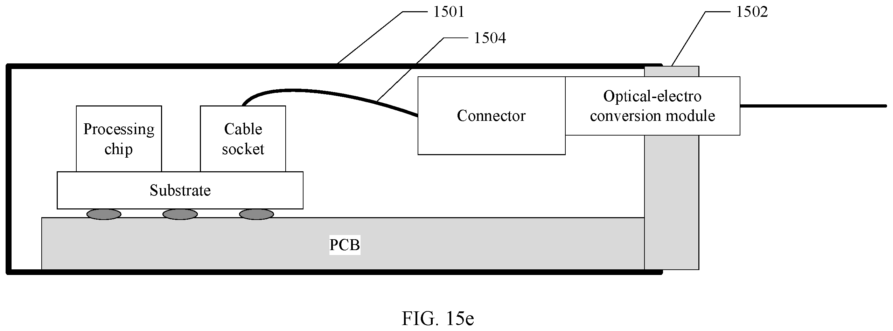

FIG. 15e is an example diagram of a fourth packaging structure of an optical-electro conversion module according to this application. A housing 1501 of a communication system shown in this example has a panel 1502. A device is fastened in the housing 1501. The device specifically includes a PCB and a substrate packaged on the PCB. The substrate is configured to package a processing chip and a cable socket. One or more optical-electro conversion modules are detachably connected to the panel 1502, and the one or more optical-electro conversion modules are electrically connected to a connector. The cable socket is connected to the connector through a high-speed cable 1504. In this case, a high-speed electrical signal between the processing chip and the connector is transferred to the low-insertion-loss high-speed cable 1504 through the cable socket for transmission. A packaging form of the optical-electro conversion module shown in this example may be an on-board optical module (on-board optics, OBO) based on an optical input/output interface (optical input&output, OIO) technology.

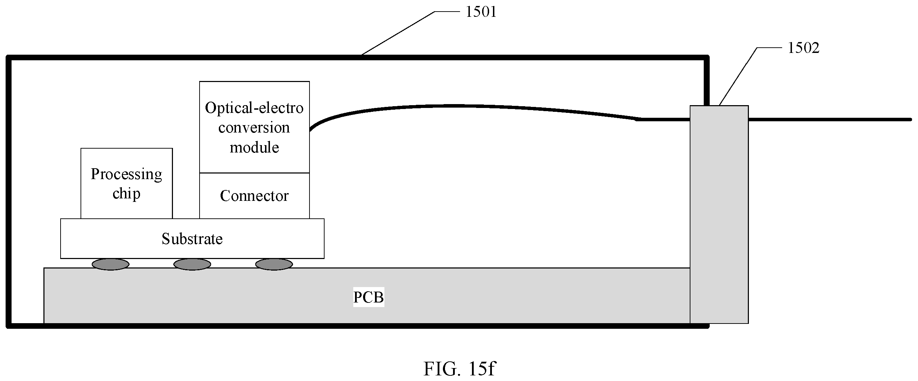

FIG. 15f is an example diagram of a fifth packaging structure of an optical-electro conversion module according to this application. A housing 1501 of a communication system shown in this example has a panel 1502. A device is fastened in the housing 1501. The device specifically includes a PCB and a substrate packaged on the PCB. The substrate is configured to package a processing chip and a connector. The connector is electrically connected to one or more optical-electro conversion modules. A high-speed electrical signal (for example, the second electrical signal in the foregoing method embodiments) is transmitted between the processing chip and the connector through a trace of the substrate. A packaging form of the optical-electro conversion module shown in this example may be a co-packaged optical module (co-packaged optics, CPO).

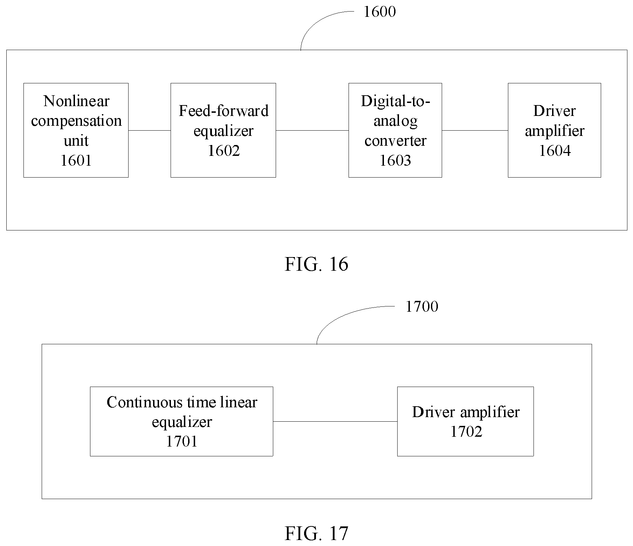

FIG. 16 is an example diagram of a structure of an embodiment of a TX interface of a device according to this application. The TX interface 1600 of the device includes an FFE 1602, a digital-to-analog converter (digital-to-analog converter, DAC) 1603, and a driver amplifier (Driver) 1604. The FFE 1602 is configured to perform, in FIG. 3, FIG. 5, FIG. 6A, FIG. 6B, FIG. 7, FIG. 9, and FIG. 10, a process of compensating a first electrical signal to obtain a second electrical signal. A specific execution process is not described. The second electrical signal output by the FFE 1602 is sent to the DAC 1603. The DAC 1603 performs digital-to-analog conversion on the second electrical signal to output a converted second electrical signal. The DAC 1603 sends the converted second electrical signal to the driver 1604.

The driver 1604 amplifies power of the converted second electrical signal to obtain an amplified second electrical signal, and sends the amplified second electrical signal to a connector of the device. Optionally, a nonlinear compensation unit 1601 is connected between the FFE 1602 and a processing chip of the device. The nonlinear compensation unit 1601 performs nonlinear compensation on the first electrical signal from the processing chip to obtain an updated first electrical signal. For descriptions of a process in which the nonlinear compensation unit 1601 performs nonlinear compensation, refer to corresponding 608 in FIG. 6A. Details are not described. The descriptions of the position of the nonlinear compensation unit 1601 in this embodiment are an optional example, and are not limited. For example, the nonlinear compensation unit 1601 may alternatively be connected between the FFE 1602 and the DAC 1603. In this case, the nonlinear compensation unit 1601 performs nonlinear compensation on the second electrical signal from the FFE 1602.

FIG. 17 is an example diagram of a structure of an embodiment of a compensation module of an optical-electro conversion module according to this application. The compensation module 1700 shown in this embodiment includes a CTLE 1701 and a driver 1702 that are sequentially connected between a connector and an electro-optical conversion chip. The CTLE 1701 receives a second electrical signal from a device, and compensates for the second electrical signal to obtain a third electrical signal. For descriptions of compensating for the second electrical signal by the CTLE 1701, refer to the process of compensating for the second electrical signal to obtain the third electrical signal in FIG. 3, FIG. 5, FIG. 6A, FIG. 6B, FIG. 7, FIG. 9, and FIG. 10. A specific execution process is not described. The driver 1702 receives the third electrical signal from the CTLE 1701, and amplifies power of the third electrical signal to obtain an amplified third electrical signal. The driver 1702 sends the amplified third electrical signal to the electro-optical conversion chip. The descriptions of the structure of the compensation module in this embodiment are an optional example, and are not limited. For example, the compensation module further includes a low-frequency equalizer (low-frequency equalizer, LFEQ) and the like.

An embodiment of this application further provides an optical network. The optical network includes a first communication system and a second communication system. The first communication system is configured to send, to the second communication system, an optical signal jointly compensated by a communication system board and an optical-electro conversion module. For a specific process of performing the signal transmission method by the first communication system, refer to any embodiment in FIG. 3, FIG. 5, FIG. 6A, FIG. 6B, FIG. 7, FIG. 9, and FIG. 10. Details are not described.

It may be clearly understood by a person skilled in the art that for convenient and brief description, for detailed working processes of the system, apparatus, and unit described above, refer to the corresponding processes in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, that is, may be located at one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, an optical disc, or the like.

## Claims

1. A signal transmission method, wherein the method is applied to a communication system, the communication system comprises a device and an optical-electro conversion module, and the method comprises:
allocating, by the device or the optical-electro conversion module, a first compensation parameter to the optical-electro conversion module, wherein the first compensation parameter is less than a link parameter of a transmit link, the link parameter is used to compensate for an electrical signal transmitted over the transmit link, the transmit link comprises a first transmit link and a second transmit link, the device comprises a processing chip and a connector, the optical-electro conversion module comprises an electro-optical conversion chip, the first transmit link is from the connector to the electro-optical conversion chip, and the second transmit link is from the processing chip to the connector;
compensating, by the device, for a first electrical signal based on a second compensation parameter, to obtain a compensated second electrical signal, wherein the second compensation parameter is less than the link parameter of the transmit link;
sending, by the device, the second electrical signal to the optical-electro conversion module;
compensating, by the optical-electro conversion module, for the second electrical signal based on the first compensation parameter, to obtain a compensated third electrical signal; and
performing, by the optical-electro conversion module, electro-optical conversion on the third electrical signal to obtain an optical signal, and emitting, by the optical-electro conversion module, the optical signal.

2. The method according to claim 1, wherein after allocating, by the device, the first compensation parameter to the optical-electro conversion module, the method further comprises:
obtaining, by the device, a first coefficient set from the optical-electro conversion module, wherein the first coefficient set is in a prestored list in the optical-electro conversion module, and corresponds to the first compensation parameter, the prestored list comprises M coefficient sets, the first coefficient set is one of the M coefficient sets, the first coefficient set is used to obtain P tap coefficients, each of M and P is any integer greater than 1, and the first coefficient set is used to compensate for the first electrical signal.

3. The method according to claim 2, wherein before compensating, by the device, for the first electrical signal based on the second compensation parameter, to obtain the compensated second electrical signal, the method comprises:
convolving, by the device, the first coefficient set and a second coefficient set to obtain a third coefficient set, wherein the second coefficient set corresponds to the second compensation parameter, the second coefficient set is used to obtain P tap coefficients, and the third coefficient set is used to compensate for the first electrical signal.

4. The method according to claim 1, wherein after allocating, by the optical-electro conversion module, the first compensation parameter to the optical-electro conversion module, the method further comprises:
obtaining, by the optical-electro conversion module, a second coefficient set from the device, wherein the second coefficient set corresponds to the second compensation parameter, the second coefficient set is used to obtain P tap coefficients, and P is any integer greater than 1;
convolving, by the optical-electro conversion module, a first coefficient set and the second coefficient set to obtain a third coefficient set, wherein the first coefficient set is in a prestored list in the optical-electro conversion module, and corresponds to the first compensation parameter, the prestored list comprises M coefficient sets, the first coefficient set is one of the M coefficient sets, the first coefficient set is used to obtain P tap coefficients, and M is any integer greater than 1; and
obtaining, by the device, the third coefficient set from the optical-electro conversion module, wherein the third coefficient set is used to compensate for the first electrical signal.

5. The method according to claim 3 or 4, wherein compensating, by the device, for the first electrical signal based on the second compensation parameter, to obtain the compensated second electrical signal comprises:
compensating, by a feed-forward equalizer FFE of the device, for the first electrical signal based on the third coefficient set, to obtain the second electrical signal, wherein the third coefficient set comprises P tap coefficients.

6. The method according to claim 1, wherein compensating, by the device, for the first electrical signal based on the second compensation parameter, to obtain the compensated second electrical signal comprises:
obtaining, by the device, a second coefficient set corresponding to the second compensation parameter, wherein the second coefficient set is used to obtain P tap coefficients, and P is any integer greater than 1; and
compensating, by an FFE of the device, for the first electrical signal based on the second coefficient set, to obtain the second electrical signal.

7. The method according to any one of claims 1 to 6, wherein before allocating, by the device or the optical-electro conversion module, the first compensation parameter to the optical-electro conversion module, the method further comprises:
obtaining, by the device or the optical-electro conversion module, the prestored link parameter; or
obtaining, by the device or the optical-electro conversion module, a first link parameter of the first transmit link, wherein the first link parameter is used to compensate for an electrical signal transmitted over the first transmit link; and
obtaining, by the device, a second link parameter of the second transmit link, wherein the second link parameter is used to compensate for an electrical signal transmitted over the second transmit link, and the link parameter is greater than or equal to a sum of the first link parameter and the second link parameter.

8. The method according to any one of claims 1 to 6, wherein before allocating, by the device or the optical-electro conversion module, the first compensation parameter to the optical-electro conversion module, the method further comprises:
obtaining, by the device or the optical-electro conversion module, a second link parameter of the second transmit link, wherein the second link parameter is used to compensate for an electrical signal transmitted over the second transmit link, and the first compensation parameter is less than the second link parameter.

9. The method according to any one of claims 1 to 8, wherein before sending, by the device, the second electrical signal to the optical-electro conversion module, the method further comprises:
obtaining, by the device, a nonlinear parameter from the optical-electro conversion module, wherein the nonlinear parameter corresponds to the first compensation parameter, and the nonlinear parameter is related to a nonlinear feature of the transmit link; and
performing, by the device, nonlinear compensation on the first electrical signal or the second electrical signal based on the nonlinear parameter.

10. A signal transmission method, wherein the method comprises:
receiving, by an optical-electro conversion module, a first compensation parameter from a device, or allocating, by the optical-electro conversion module, the first compensation parameter to the optical-electro conversion module, wherein the first compensation parameter is less than a link parameter of a transmit link, the link parameter is used to compensate for an electrical signal transmitted over the transmit link, the transmit link comprises a first transmit link and a second transmit link, the device comprises a processing chip and a connector, the optical-electro conversion module comprises an electro-optical conversion chip, the first transmit link is from the connector to the electro-optical conversion chip, and the second transmit link is from the processing chip to the connector;
receiving, by the optical-electro conversion module, a second electrical signal from the device;
compensating, by the optical-electro conversion module, for the second electrical signal based on the first compensation parameter, to obtain a compensated third electrical signal; and
performing, by the optical-electro conversion module, electro-optical conversion on the third electrical signal to obtain an optical signal, and emitting, by the optical-electro conversion module, the optical signal.

11. The method according to claim 10, wherein after receiving, by the optical-electro conversion module, the first compensation parameter from the device, the method further comprises:
sending, by the optical-electro conversion module, a first coefficient set to the device, wherein the first coefficient set is in a prestored list in the optical-electro conversion module, and corresponds to the first compensation parameter, the prestored list comprises M coefficient sets, the first coefficient set is one of the M coefficient sets, the first coefficient set is used to obtain P tap coefficients, each of M and P is any integer greater than 1, and the first coefficient set is used to compensate for a first electrical signal to obtain the second electrical signal.

12. The method according to claim 10, wherein after allocating, by the optical-electro conversion module, the first compensation parameter to the optical-electro conversion module, the method further comprises:
obtaining, by the optical-electro conversion module, a second coefficient set from the device, wherein the second coefficient set is used to obtain P tap coefficients, and P is any integer greater than 1;
convolving, by the optical-electro conversion module, a first coefficient set and the second coefficient set to obtain a third coefficient set, wherein the first coefficient set is in a prestored list in the optical-electro conversion module, and corresponds to the first compensation parameter, the prestored list comprises M coefficient sets, the first coefficient set is one of the M coefficient sets, the first coefficient set is used to obtain P tap coefficients, and M is any integer greater than 1; and
sending, by the optical-electro conversion module, the third coefficient set to the device, wherein the third coefficient set is used to compensate for a first electrical signal to obtain the second electrical signal.

13. The method according to claim 10, wherein before receiving, by the optical-electro conversion module, the second electrical signal from the device, the method further comprises:
allocating, by the optical-electro conversion module, a second compensation parameter to the device, wherein the second compensation parameter is less than the link parameter, the second compensation parameter corresponds to a second coefficient set, the second coefficient set is used to obtain P tap coefficients, and the second coefficient set is used to compensate for a first electrical signal to obtain the second electrical signal.

14. The method according to any one of claims 10 to 13, wherein after receiving, by the optical-electro conversion module, the first compensation parameter from the device, or after allocating, by the optical-electro conversion module, the first compensation parameter to the optical-electro conversion module, the method further comprises:
sending, by the optical-electro conversion module, a nonlinear parameter to the device, wherein the nonlinear parameter corresponds to the first compensation parameter, the nonlinear parameter is related to a nonlinear feature of the transmit link, and the nonlinear parameter is used to perform nonlinear compensation on the electrical signal transmitted over the transmit link.

15. A signal transmission method, wherein the method comprises:
compensating, by a device, a first electrical signal based on a second compensation parameter, to obtain a compensated second electrical signal, wherein the second compensation parameter is less than a link parameter of a transmit link, the link parameter is used to compensate for an electrical signal transmitted over the transmit link, the transmit link comprises a first transmit link and a second transmit link, the device comprises a processing chip and a connector, an optical-electro conversion module comprises an electro-optical conversion chip, the first transmit link is from the connector to the electro-optical conversion chip, and the second transmit link is from the processing chip to the connector; and
sending, by the device, the second electrical signal to the optical-electro conversion module.

16. The method according to claim 15, wherein before compensating, by the device, for the first electrical signal based on the second compensation parameter, to obtain the compensated second electrical signal, the method further comprises:
allocating, by the device, a first compensation parameter to the optical-electro conversion module, wherein the first compensation parameter is less than the link parameter of the transmit link;
sending, by the device, a second link parameter of the second transmit link to the optical-electro conversion module, wherein the second link parameter is used to compensate for an electrical signal transmitted over the second transmit link, and the second link parameter is used to obtain the first compensation parameter; or
sending, by the device, the link parameter to the optical-electro conversion module.

17. The method according to claim 15 or 16, wherein before compensating, by the device, for the first electrical signal based on the second compensation parameter, to obtain the compensated second electrical signal, the method further comprises:
obtaining, by the device, a first coefficient set from the optical-electro conversion module, wherein the first coefficient set is used to obtain P tap coefficients; and
convolving, by the device, the first coefficient set and a second coefficient set to obtain a third coefficient set, wherein the second coefficient set corresponds to the second compensation parameter, the second coefficient set is used to obtain P tap coefficients, and P is any integer greater than 1.

18. The method according to claim 15 or 16, wherein before compensating, by the device, for the first electrical signal based on the second compensation parameter, to obtain the compensated second electrical signal, the method further comprises:
sending, by the device, a second coefficient set to the optical-electro conversion module, wherein the second coefficient set corresponds to the second compensation parameter, the second coefficient set is used to obtain P tap coefficients, and P is any integer greater than 1; and
obtaining, by the device, a third coefficient set from the optical-electro conversion module, wherein the third coefficient set is used to obtain P tap coefficients.

19. The method according to claim 17 or 18, wherein compensating, by the device, for the first electrical signal based on the second compensation parameter, to obtain the compensated second electrical signal comprises:
compensating, by an FFE of the device, for the first electrical signal based on the third coefficient set, to obtain the second electrical signal.

20. The method according to claim 15 or 16, wherein compensating, by the device, for the first electrical signal based on the second compensation parameter, to obtain the compensated second electrical signal comprises:
obtaining, by the device, the second compensation parameter, wherein the second compensation parameter is less than the link parameter;
obtaining, by the device, a second coefficient set corresponding to the second compensation parameter, wherein the second coefficient set is used to obtain P tap coefficients, and P is any integer greater than 1; and
compensating, by an FFE of the device, for the first electrical signal based on the second coefficient set, to obtain the second electrical signal.

21. The method according to any one of claims 15 to 20, wherein before sending, by the device, the second electrical signal to the optical-electro conversion module, the method further comprises:
obtaining, by the device, a nonlinear parameter from the optical-electro conversion module, wherein the nonlinear parameter is related to a nonlinear feature of the transmit link; and
performing, by the device, nonlinear compensation on the first electrical signal or the second electrical signal based on the nonlinear parameter.

22. A communication system, wherein the communication system comprises a housing, a device and an optical-electro conversion module are fastened in the housing, the device comprises a processing chip and a connector, the optical-electro conversion module comprises a compensation module, an electro-optical conversion chip, and an output optical fiber that are sequentially connected, the optical-electro conversion module further comprises a control chip that is separately connected to the compensation module and the electro-optical conversion chip, and the processing chip is connected to the compensation module through the connector;
the processing chip or the control chip is configured to allocate a first compensation parameter to the compensation module, wherein the first compensation parameter is less than a link parameter of a transmit link, the link parameter is used to compensate for an electrical signal transmitted over the transmit link, the transmit link comprises a first transmit link and a second transmit link, the first transmit link is from the connector to the electro-optical conversion chip, and the second transmit link is from the processing chip to the connector;
the processing chip is configured to compensate for a first electrical signal based on a second compensation parameter, to obtain a compensated second electrical signal, wherein the second compensation parameter is less than the link parameter of the transmit link;
the processing chip is configured to send the second electrical signal to the compensation module through the connector;
the compensation module is configured to compensate for the second electrical signal based on the first compensation parameter, to obtain a compensated third electrical signal;
the electro-optical conversion chip is configured to perform electro-optical conversion on the third electrical signal to obtain an optical signal; and
the output optical fiber is configured to emit the optical signal.

23. An optical-electro conversion module, wherein the optical-electro conversion module comprises a compensation module, an electro-optical conversion chip, and an output optical fiber that are sequentially connected, the optical-electro conversion module further comprises a control chip that is separately connected to the compensation module and the electro-optical conversion chip, and the compensation module is connected to a connector of a device;
the compensation module is configured to receive a first compensation parameter from the device through the connector, or the control chip is configured to allocate the first compensation parameter to the compensation module, wherein the first compensation parameter is less than a link parameter of a transmit link, the link parameter is used to compensate for an electrical signal transmitted over the transmit link, the transmit link comprises a first transmit link and a second transmit link, the device further comprises a processing chip, the first transmit link is from the connector to the electro-optical conversion chip, and the second transmit link is from the processing chip to the connector;
the compensation module is further configured to: receive a second electrical signal from the device through the connector, and compensate for the second electrical signal based on the first compensation parameter, to obtain a compensated third electrical signal;
the electro-optical conversion chip is configured to perform electro-optical conversion on the third electrical signal to obtain an optical signal; and
the output optical fiber is configured to emit the optical signal.

24. A device, wherein the device comprises a housing, the device is fastened in the housing, the device comprises a processing chip and a connector, and the processing chip is connected to the optical-electro conversion module through the connector;
the processing chip is configured to compensate for a first electrical signal based on a second compensation parameter, to obtain a compensated second electrical signal, wherein the second compensation parameter is less than a link parameter of a transmit link, the link parameter is used to compensate for an electrical signal transmitted over the transmit link, the transmit link comprises a first transmit link and a second transmit link, the optical-electro conversion module comprises an electro-optical conversion chip, the first transmit link is from the connector to the electro-optical conversion chip, and the second transmit link is from the processing chip to the connector; and
the processing chip is further configured to send the second electrical signal to the optical-electro conversion module through the connector.
